# EUROPEAN PATENT SPECIFICATION

(11) **EP 3 414 931 B1**
(45) Date of publication and mention of the grant of the patent: **15.12.2021**
(21) Application number: 17708008.2
(22) Date of filing: 05.02.2017
(51) Int. Cl.: H04W 16/14

(54) **APPARATUS AND METHOD OF COMMUNICATING A ZONE IDENTIFIER FOR MANAGEMENT OF SHARED SPECTRUM RESOURCES**
VORRICHTUNGEN UND VERFAHREN ZUR KOMMUNIKATION EINER ZONENIDENTIFIZIERUNG ZUM VERWALTEN VON GETEILTEN SPEKTRUMSRESSOURCEN
APPAREILS ET PROCÉDÉ POUR COMMUNIQUER UN IDENTIFIANT DE ZONE DES RESSOURCES POUR GESTION DE SPECTRE RADIO PARTAGÉ

(30) Priority: 10.02.2016 US 201662293707 P
(43) Date of publication of application: 19.12.2018
(73) Proprietor: Apple Inc., Cupertino, CA 95014 (US)
(72) Inventor: NOLAN, Keith, Westmeath, N91 C7W7 (IE); MUECK, Markus Dominik, 82008 Unterhaching (DE); SRIKANTESWARA, Srikathyayani, Portland, Oregon 97229 (US); KELLY, Mark Y., Leixlip Kildare (IE)
(74) Representative: Lang, Johannes
(86) International application number: PCT/US2017/016622
(87) International publication number: WO 2017/139206

(56) References cited:
- US-A1- 2016 037 480
- QUALCOMM UK LTD: "Draft - DTS/RRS-0146 v0.0.3 (TS 103 379 ) Information elements and protocols for the LSA1 interface", ETSI DRAFT; RRSWG1(16)033010, EUROPEAN TELECOMMUNICATIONS STANDARDS INSTITUTE (ETSI), 650, ROUTE DES LUCIOLES ; F-06921 SOPHIA-ANTIPOLIS ; FRANCE , no. 0 3 8 February 2016 (2016-02-08), pages 1-18, XP014267844, Retrieved from the Internet: URL:docbox.etsi.org\RRS\RRS\60-WGs\WG1\05- CONTRIBUTIONS\2016\RRSWG1(16)033010_Draft_ -_DTS_RRS-0146__v0_0_3__TS_103_379____Info rmation_elem\RRS-0146v111_003.docx [retrieved on 2016-02-08]
- A. MORGADO ET AL: "Dynamic LSA for 5G networks the ADEL perspective", 2015 EUROPEAN CONFERENCE ON NETWORKS AND COMMUNICATIONS (EUCNC), 1 June 2015 (2015-06-01), pages 190-194, XP055369563, DOI: 10.1109/EuCNC.2015.7194066 ISBN: 978-1-4673-7359-3
- Markus Dominik ET AL: "Spectrum Sharing: Licensed Shared Access (LSA) and Spectrum Access System (SAS) Contents", , 1 October 2015 (2015-10-01), XP055369568, Retrieved from the Internet: URL:http://www.intel.com/content/dam/www/p ublic/us/en/documents/white-papers/spectru m-sharing-lsa-sas-paper.pdf [retrieved on 2017-05-04]
- "Reconfigurable Radio Systems (RRS)", ETSI TS 103 235 V1,1,1, October 2015 (2015-10), XP002769873, cited in the application

## Description

### CROSS REFERENCE

This application claims the benefit of and priority from US Provisional Patent Application No. 62/293,707 entitled "ZONE ID FORMAT, ENCODING, AND DECODING PROCESS FOR LICENSED SHARED ACCESS", filed February 10, 2016.

### TECHNICAL FIELD

Some embodiments described herein generally relate to communicating a zone identifier for management of shared spectrum resources.

### BACKGROUND

Licensed shared access (LSA) technology is focused on a provision of additional cellular capacity, for example, below 6 Gigahertz (GHz) in the European Union (EU), which is based on licensed shared usage of Third Generation Partnership Project (3GPP) Long Term Evolution (LTE).

In legacy networks, the LSA technology may be the only mean for accessing a 2.3GHz band in the EU.

It may be expected that one or more other frequencies may come under the LSA in the future as per European Conference of Postal and Telecommunications Administrations (CEPT)'s disclosures.

The document QUALCOMM UK LTD: "Draft - DTS/RRS-0146 v0.0.3 (TS 103 379) Information elements and protocols for the LSA1 interface", , no. 0 3 8 February 2016 (2016-02-08), pages 1-18, discloses Information elements and protocols for the LSA1 interface.

The document US2016037480 A1 discloses a method for collecting location data from mobile devices using internal global positioning system that involves sending information update comprising resolution geographic descriptor without providing mobile device location data to server.

The invention is defined by the appended independent claims, further details are defined by the dependent claims.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative embodiments.
Fig. 2 is a schematic block diagram illustration of a Licensed shared access (LSA) architecture, in accordance with some demonstrative embodiments.
Fig. 3 is a schematic block diagram illustration of an LSA architecture, in accordance with some demonstrative embodiments.
Fig. 4 is a schematic illustration of operations and communications between an LSA repository (LR) and an LSA controller (LC), in accordance with some demonstrative embodiments.
Fig. 5 is a schematic block diagram illustration of a Spectrum Access System (SAS), in accordance with some demonstrative embodiments.
Figs 6A, 6B, 6C and 6D are schematic illustrations of different grid sizes of geographical zones, in accordance with some demonstrative embodiments.
Fig. 7 is a schematic flow-chart illustration of a method of encoding a zone identifier, in accordance with some demonstrative embodiments.
Fig. 8 is a schematic flow-chart illustration of a method of decoding a zone identifier, in accordance with some demonstrative embodiments.
Fig. 9 is a schematic illustration of elements of an electronic device, in accordance with some demonstrative embodiments.
Fig. 10 is a schematic flow-chart illustration of a method of sending a zone identifier for management of shared spectrum resources, in accordance with some demonstrative embodiments.
Fig. 11 is a schematic flow-chart illustration of a method of processing a received zone identifier for management of shared spectrum resources, in accordance with some demonstrative embodiments.
Fig. 12 is a schematic illustration of a product, in accordance with some demonstrative embodiments not forming part of the invention.

### DETAILED DESCRIPTION

In the following detailed description, numerous specific details are set forth in order to provide a thorough understanding of some embodiments. However, it will be understood by persons of ordinary skill in the art that some embodiments may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one embodiment," "an embodiment," "demonstrative embodiment," "various embodiments," etc., indicate that the embodiment(s) so described may include a particular feature, structure, or characteristic, but not every embodiment necessarily includes the particular feature, structure, or characteristic. Further, repeated use of the phrase "in one embodiment" does not necessarily refer to the same embodiment, although it may.

As used herein, unless otherwise specified the use of the ordinal adjectives "first," "second," "third," etc., to describe a common object, merely indicate that different instances of like objects are being referred to, and are not intended to imply that the objects so described must be in a given sequence, either temporally, spatially, in ranking, or in any other manner.

Some embodiments may be used in conjunction with various devices and systems, for example, a Personal Computer (PC), a desktop computer, a mobile computer, a laptop computer, a notebook computer, a tablet computer, a Smartphone device, a server computer, a handheld computer, a handheld device, a Personal Digital Assistant (PDA) device, a handheld PDA device, an on-board device, an off-board device, an Internet of Things (IoT) device, a sensor device, a wearable device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a cellular network, a cellular node, a cellular device, a Wireless Local Area Network (WLAN), a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, vending machines, sell terminals, and the like.

Some embodiments may be used in conjunction with devices and/or networks operating in accordance with existing Licensed Shared Access (LSA) specifications (including 3GPP TS 103 379 ("ETSI TS 103 379 V 0.0.3(2016-02) Reconfigurable Radio Systems (RRS); Information elements and protocols for the interface between LSA Controller (LC) and LSA Repository (LR) for operation of Licensed Shared Access (LSA) in the 2300 MHz-2400 MHz band"), 3GPP TS 103 235 ("ETSI TS 103 235 V1.1.1 (2015-10) Reconfigurable Radio Systems (RRS); System architecture and high level procedures for operation of Licensed Shared Access (LSA) in the 2 300 MHz - 2 400 MHz band"); and/or 3GPP TS 103 154 ("ETSI TS 103 154 V1.1.1 (2014-10) reconfigurable Radio Systems (RRS); System requirements for operation of Mobile Broadband Systems in the 2 300 MHz - 2 400 MHz band under Licensed Shared Access (LSA)") and/or future versions and/or derivatives thereof, devices and/or networks operating in accordance with existing IEEE 802.16 standards (IEEE-Std 802.16, 2009 Edition, Air Interface for Fixed Broadband Wireless Access Systems*;* IEEE-Std 802.16e, 2005 Edition, Physical and Medium Access Control Layers for Combined Fixed and Mobile Operation in Licensed Bands*; amendment to* IEEE Std 802.16-2009, developed by Task Group m*)* and/or future versions and/or derivatives thereof, devices and/or networks operating in accordance with existing *WirelessHD^{™}* specifications and/or future versions and/or derivatives thereof, units and/or devices which are part of the above networks, and the like.

Some embodiments may be used in conjunction with one or more types of wireless communication signals and/or systems, for example, Radio Frequency (RF), Frequency-Division Multiplexing (FDM), Orthogonal FDM (OFDM), Single Carrier Frequency Division Multiple Access (SC-FDMA), Single Carrier or OFDM flavors (including CP-OFDM, SC-FDMA, SC-OFDM, filter bank-based multicarrier (FBMC), OFDMA, and the like), Time-Division Multiplexing (TDM), Time-Division Multiple Access (TDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{®}, Global Positioning System (GPS), Wireless Fidelity (Wi-Fi), Wi-Max, ZigBee^{™}, Ultra-Wideband (UWB), Global System for Mobile communication (GSM), second generation (2G), 2.5G, 3G, 3.5G, 4G, Fifth Generation (5G) mobile networks, 3GPP, 3GPP New Radio (NR), e.g., by allocating OFDM carrier data bit vectors to corresponding symbol resources, Long Term Evolution (LTE) cellular system, LTE advance cellular system, High-Speed Downlink Packet Access (HSDPA), High-Speed Uplink Packet Access (HSUPA), High-Speed Packet Access (HSPA), HSPA+, Single Carrier Radio Transmission Technology (1XRTT), Evolution-Data Optimized (EV-DO), Enhanced Data rates for GSM Evolution (EDGE), and the like. Other embodiments may be used in various other devices, systems and/or networks.

Some demonstrative embodiments may be used in conjunction with one or more radio communication technologies and/or standards operating one or more radio links, for example, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology, for example Universal Mobile Telecommunications System (UMTS), Freedom of Multimedia Access (FOMA), 3GPP Long Term Evolution (LTE), 3GPP Long Term Evolution Advanced (LTE Advanced), Code division multiple access 2000 (CDMA2000), Cellular Digital Packet Data (CDPD), Mobitex, Third Generation (3G), Circuit Switched Data (CSD), High-Speed Circuit-Switched Data (HSCSD), Universal Mobile Telecommunications System (Third Generation) (UMTS (3G)), Wideband Code Division Multiple Access (Universal Mobile Telecommunications System) (W-CDMA (UMTS)), High Speed Packet Access (HSPA), High-Speed Downlink Packet Access (HSDPA), High-Speed Uplink Packet Access (HSUPA), High Speed Packet Access Plus (HSPA+), Universal Mobile Telecommunications System-Time-Division Duplex (UMTS-TDD), Time Division-Code Division Multiple Access (TD-CDMA), Time Division-Synchronous Code Division Multiple Access (TD-CDMA), 3rd Generation Partnership Project Release 8 (Pre-4th Generation) (3GPP Rel. 8 (Pre-4G)), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 5G, 3GPP LTE Extra, LTE-Advanced Pro, LTE Licensed-Assisted Access (LAA), MuLTEfire, UMTS Terrestrial Radio Access (UTRA), Evolved UMTS Terrestrial Radio Access (E-UTRA), Long Term Evolution Advanced (4th Generation) (LTE Advanced (4G)), cdmaOne (2G), Code division multiple access 2000 (Third generation) (CDMA2000 (3G)), Evolution-Data Optimized or Evolution-Data Only (EV-DO), Advanced Mobile Phone System (1st Generation) (AMPS (1G)), Total Access Communication System/Extended Total Access Communication System (TACS/ETACS), Digital AMPS (2nd Generation) (D-AMPS (2G)), Push-to-talk (PTT), Mobile Telephone System (MTS), Improved Mobile Telephone System (IMTS), Advanced Mobile Telephone System (AMTS), OLT (Norwegian for Offentlig Landmobil Telefoni, Public Land Mobile Telephony), MTD (Swedish abbreviation for Mobiltelefonisystem D, or Mobile telephony system D), Public Automated Land Mobile (Autotel/PALM), ARP (Finnish for Autoradiopuhelin, "car radio phone"), NMT (Nordic Mobile Telephony), High capacity version of NTT (Nippon Telegraph and Telephone) (Hicap), Cellular Digital Packet Data (CDPD), Mobitex, DataTAC, Integrated Digital Enhanced Network (iDEN), Personal Digital Cellular (PDC), Circuit Switched Data (CSD), Personal Handy-phone System (PHS), Wideband Integrated Digital Enhanced Network (WiDEN), iBurst, Unlicensed Mobile Access (UMA), also referred to as also referred to as 3GPP Generic Access Network, or GAN standard), Zigbee, Bluetooth^{®}, Wireless Gigabit Alliance (WiGig) standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p and other) Vehicle-to-Vehicle (V2V) and Vehicle-to-X (V2X) and Vehicle-to-Infrastructure (V2I) and Infrastructure-to-Vehicle (I2V) communication technologies, 3GPP cellular V2X, DSRC (Dedicated Short Range Communications) communication systems such as Intelligent-Transport-Systems and others, and the like. Other embodiments may be used in conjunction with various other radio communication technologies and/or standards.

Some demonstrative embodiments may be used in conjunction with one or more applicable spectrum bands, for example, IMT (International Mobile Telecommunications) spectrum (including 450 - 470 MHz, 790 - 960 MHz, 1710 - 2025 MHz, 2110 - 2200 MHz, 2300 - 2400 MHz, 2500 - 2690 MHz, 698-790 MHz, 610 - 790 MHz, 3400 - 3600 MHz), IMT-advanced spectrum, IMT-2020 spectrum (expected to include 3600-3800 MHz, 3.5 GHz bands, 700 MHz bands, bands within the 24.25-86 GHz range, and the like), spectrum made available under FCC's "Spectrum Frontier" 5G initiative (including 27.5 - 28.35 GHz, 29.1 - 29.25 GHz, 31 - 31.3 GHz, 37 - 38.6 GHz, 38.6 - 40 GHz, 42 - 42.5 GHz, 57 - 64 GHz, 71 - 76 GHz, 81 - 86 GHz and 92 - 94 GHz, and the like), the ITS (Intelligent Transport Systems) band of 5.9 GHz (typically including 5.85-5.925 GHz), 63-64 GHz bands currently allocated to automotive radar applications such as 76-81 GHz, and/or future bands (including 94-300 GHz and above), and/or any other applicable spectrum bands. Some of the band described above, may be limited, for example, to specific region(s) and/or countries.

Some embodiments may be used in conjunction with one or more additional, e.g., secondary, bands, for example, TV White Space bands (including bands typically below 790 MHz, e.g., in particular the 400 MHz and 700 MHz bands), and/or any other additional bands.

Some embodiments may be used in conjunction with various applications, for example, cellular applications, and/or one or more applications for vertical markets, e.g., Program Making and Special Events (PMSE) applications, medical applications, health applications, surgery applications, automotive applications, low-latency applications, drones applications, and/or the like.

The term "wireless device", as used herein, includes, for example, a device capable of wireless communication, a communication device capable of wireless communication, a communication station capable of wireless communication, a portable or non-portable device capable of wireless communication, or the like. In some demonstrative embodiments, a wireless device may be or may include a peripheral that is integrated with a computer, or a peripheral that is attached to a computer. In some demonstrative embodiments, the term "wireless device" may optionally include a wireless service.

The term "communicating" as used herein with respect to a communication signal includes transmitting the communication signal and/or receiving the communication signal. For example, a communication unit, which is capable of communicating a communication signal, may include a transmitter to transmit the communication signal to at least one other communication unit, and/or a communication receiver to receive the communication signal from at least one other communication unit. The verb communicating may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device.

As used herein, the term "circuitry" may refer to, be part of, or include, an Application Specific Integrated Circuit (ASIC), an integrated circuit, an electronic circuit, a processor (shared, dedicated, or group), and/or memory (shared, dedicated, or group), that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry, e.g. radio circuitry, receiver circuitry, control circuitry, transmitter circuitry, transceiver circuitry, processor circuitry, and/or the like. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

The term "antenna", as used herein, may include any suitable configuration, structure and/or arrangement of one or more antenna elements, components, units, assemblies and/or arrays. In some embodiments, the antenna may implement transmit and receive functionalities using separate transmit and receive antenna elements. In some embodiments, the antenna may implement transmit and receive functionalities using common and/or integrated transmit/receive elements. The antenna may include, for example, a phased array antenna, a single element antenna, a dipole antenna, a set of switched beam antennas, and/or the like.

The term "cell", as used herein, may include a combination of network resources, for example, downlink and optionally uplink resources. The resources may be controlled and/or allocated, for example, by a node (also referred to as a "base station"), or the like. The linking between a carrier frequency of the downlink resources and a carrier frequency of the uplink resources may be indicated in system information transmitted on the downlink resources.

Some demonstrative embodiments are described herein with respect to a LTE network. However, other embodiments may be implemented in any other suitable cellular network or system, e.g., a Universal Mobile Telecommunications System (UMTS) cellular system, a GSM network, a 3G cellular network, a 4G cellular network, a 4.5G network, a 5G cellular network, a WiMAX cellular network, and the like.

Some demonstrative embodiments may be used in conjunction with a Heterogeneous Network (HetNet), which may utilize a deployment of a mix of technologies, frequencies, cell sizes and/or network architectures, e.g., including cellular, millimeter wave ("mmWave" or "mmW"), and/or the like. In one example, the HetNet may include a radio access network having layers of different-sized cells ranging from large macrocells to small cells, for example, picocells and femtocells. Other embodiments may be used in conjunction with any other suitable wireless communication network.

Other embodiments may be used in conjunction with any other suitable wireless communication network.

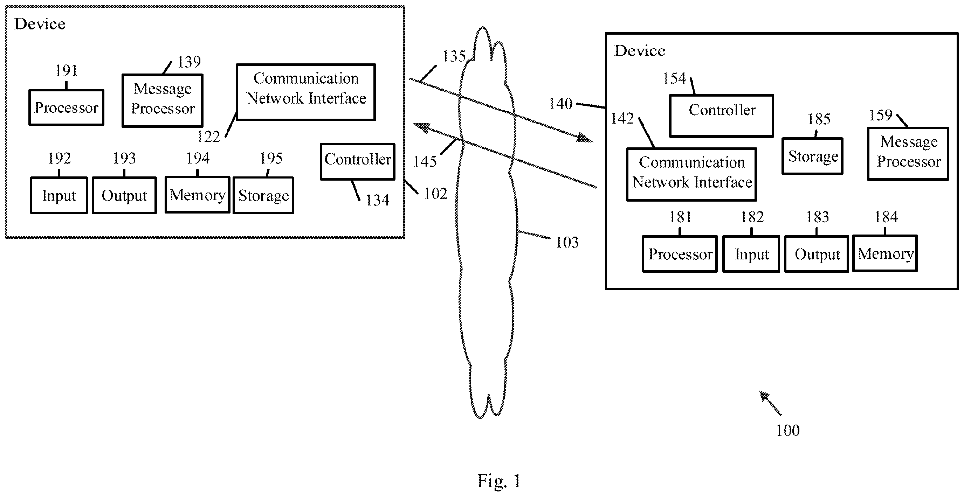

Reference is now made to Fig. 1, which schematically illustrates a block diagram of a system 100, in accordance with some demonstrative embodiments.

As shown in Fig. 1, in some demonstrative embodiments, system 100 may include one or more devices for management of shared spectrum resources capable of communicating content, data, information and/or signals via one or more communication interfaces. For example, system 100 may include a first device 102 for management of shared spectrum resources, and/or a second device 140 for management of shared spectrum resources, e.g., as described below.

For example, devices 102 and/or 140 may include, for example, a computing device, a server device, a computing system, an electronic device, or the like.

In some demonstrative embodiments, device 102 may include, for example, one or more of a processor 191, an input unit 192, an output unit 193, a memory unit 194, and/or a storage unit 195; and/or device 140 may include, for example, one or more of a processor 181, an input unit 182, an output unit 183, a memory unit 184, and/or a storage unit 185. Devices 102 and/or 140 may optionally include other suitable hardware components and/or software components. In some demonstrative embodiments, some or all of the components of one or more of devices 102 and/or 140 may be enclosed in a common housing or packaging, and may be interconnected or operably associated using one or more wired or wireless links. In other embodiments, components of one or more of devices 102 and/or 140 may be distributed among multiple or separate devices. In one example, device 102 may include processor 191, memory unit 194, and/or storage unit 195, and/or may not include input unit 192 and/or output unit 193; and device 140 may include processor 181, memory unit 184, and/or storage unit 185, and/or may not include input unit 182 and/or output unit 183. In another example, devices 102 and/or 140 may include any other combination of hardware components.

In some demonstrative embodiments, processor 191 and/or processor 181 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 191 may execute instructions, for example, of an Operating System (OS) of device 102. Processor 181 may execute instructions, for example, of an Operating System (OS) of device 140 and/or of one or more suitable applications.

In some demonstrative embodiments, input unit 192 and/or input unit 182 may include, for example, a keyboard, a keypad, a mouse, a touch-screen, a touch-pad, a trackball, a stylus, a microphone, or other suitable pointing device or input device. Output unit 193 and/or output unit 183 may include, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

In some demonstrative embodiments, memory unit 194 and/or memory unit 184 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 and/or storage unit 185 may include, for example, a hard disk drive, a floppy disk drive, a Compact Disk (CD) drive, a CD-ROM drive, a DVD drive, or other suitable removable or non-removable storage units. Memory unit 194 and/or storage unit 195, for example, may store data processed by device 102. Memory unit 184 and/or storage unit 185, for example, may store data processed by device 140.

In some demonstrative embodiments, devices 102 and/or 140 may include one or more communication interfaces. For example, device 102 may include a communication interface 122 to interface between devices 102, 140 and/or one or more other devices, and/or device 140 may include a communication interface 142 to interface between devices 102, 140 and/or one or more other devices.

In some demonstrative embodiments, communication interfaces 122 and/or 142 may include a wired interface and/or a wireless interface.

In another example, communication interfaces 122 and/or 142 may include one or more radios associated with one or more antennas, for example, to perform wireless communication between devices 102, 140 and/or one or more other wireless communication devices.

In another example, communication interfaces 122 and/or 142 may include one or more wired network adapters, for example, to connect devices 102 and/or 140 to one or more other communication devices.

In some demonstrative embodiments, communication interfaces 122 and/or 142 may be associated with and/or may include, for example, a gateway (GW) and/or an application programming interface (API), for example, to transfer information between devices 102, 140 and/or one or more other communication devices, e.g., internal or external, parties, users, applications and/or systems.

In some demonstrative embodiments, device 102 may include a controller 134, and/or device 140 may include a controller 154. Controller 134 may be configured to perform and/or to trigger, cause, instruct and/or control device 102 to perform, one or more communications, to generate and/or communicate one or more messages and/or transmissions, and/or to perform one or more functionalities, operations and/or procedures between devices 102, 140 and/or one or more other devices; and/or controller 154 may be configured to perform, and/or to trigger, cause, instruct and/or control device 140 to perform, one or more communications, to generate and/or communicate one or more messages and/or transmissions, and/or to perform one or more functionalities, operations and/or procedures between devices 102, 140 and/or one or more other devices, e.g., as described below.

In some demonstrative embodiments, controllers 134 and/or 154 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, baseband (BB) circuitry and/or logic, a BB processor, a BB memory, Application Processor (AP) circuitry and/or logic, an AP processor, an AP memory, and/or any other circuitry and/or logic, configured to perform the functionality of controllers 134 and/or 154, respectively. Additionally or alternatively, one or more functionalities of controllers 134 and/or 154 may be implemented by logic, which may be executed by a machine and/or one or more processors, e.g., as described below.

In some demonstrative embodiments, device 102 may include a message processor 139 configured to generate, process and/or access one or messages communicated by device 102.

In one example, message processor 139 may be configured to generate one or more messages to be communicated by device 102, and/or message processor 139 may be configured to access and/or to process one or more messages received by device 102, e.g., as described below.

In some demonstrative embodiments, device 140 may include a message processor 159 configured to generate, process and/or access one or messages communicated by device 140.

In one example, message processor 159 may be configured to generate one or more messages to be communicated by device 140, and/or message processor 159 may be configured to access and/or to process one or more messages received by device 140, e.g., as described below.

In some demonstrative embodiments, message processors 139 and/or 159 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, BB circuitry and/or logic, a BB processor, a BB memory, AP circuitry and/or logic, an AP processor, an AP memory, and/or any other circuitry and/or logic, configured to perform the functionality of message processors 129 and/or 159, respectively. Additionally or alternatively, one or more functionalities of message processors 129 and/or 159 may be implemented by logic, which may be executed by a machine and/or one or more processors, e.g., as described below.

In some demonstrative embodiments, at least part of the functionality of message processor 139 may be implemented as part of communication interface 122, and/or at least part of the functionality of message processor 159 may be implemented as part of communication interface 142.

In some demonstrative embodiments, at least part of the functionality of message processor 139 may be implemented as part of controller 134, and/or at least part of the functionality of message processor 159 may be implemented as part of controller 154.

In other embodiments, at least part of the functionality of message processor 139 may be implemented as part of any other element of device 102, and/or at least part of the functionality of message processor 159 may be implemented as part of any other element of device 140.

In some demonstrative embodiments, at least part of the functionality of controller 134 and/or message processor 139 may be implemented by an integrated circuit, for example, a chip, e.g., a System on Chip (SoC). For example, the chip or SoC may include one or more elements of controller 134, one or more elements of message processor 139, and/or one or more elements of communication interface 122. In one example, controller 134, message processor 139, and communication interface 122 may be implemented as part of the chip or SoC.

In other embodiments, controller 134, message processor 139 and/or communication interface 122 may be implemented by one or more additional or alternative elements of device 102.

In some demonstrative embodiments, at least part of the functionality of controller 154 and/or message processor 159 may be implemented by an integrated circuit, for example, a chip, e.g., a System on Chip (SoC). In one example, the chip or SoC may be configured to perform one or more functionalities of communication interface 142. For example, the chip or SoC may include one or more elements of controller 154, one or more elements of message processor 159, and/or one or more elements of communication interface 142. In one example, controller 154, message processor 159, and communication interface 142 may be implemented as part of the chip or SoC.

In other embodiments, controller 154, message processor 159 and/or communication interface 142 may be implemented by one or more additional or alternative elements of device 140.

In some demonstrative embodiments, devices 102 and/or 140 may be configured to communicate a zone identifier (ID) of a geographical zone, e.g., as described below.

In some demonstrative embodiments, device 102 may be configured to encode a zone ID of a geographical zone and to transmit a message including the zone ID to device 140, e.g., as described below.

In some demonstrative embodiments, device 140 may be configured to process the message including the zone ID, and to decode the zone ID, for example, to determine the geographical zone, e.g., as described below.

In some demonstrative embodiments, controller 124 may be configured to control, cause and/or trigger device 102 to encode a zone ID based on location information of a geographical zone, e.g., as described below.

In some demonstrative embodiments, the zone identifier may include one or more zone ID character strings having a string length, which is based on a grid size of the geographical zone, e.g., as described below.

In one example, a character string may include a sequence of characters, for example, a data type, which may be implemented as an array of bytes or words including a sequence of characters, e.g., in the form of letters, numbers, digits, symbols, and/or marks.

In some demonstrative embodiments, the one or more zone ID character strings may have a string length of *N*+*1* bytes, wherein *N* denotes the grid size of the geographical zone.

In some demonstrative embodiments, the one or more zone ID character strings may include one or more hexadecimal character strings, e.g., as described below.

In some demonstrative embodiments, the one or more zone ID character strings may include one or more binary character strings, e.g., as described below.

In other embodiments, the one or more zone ID character strings may include any other additional or alternative types of characters.

In some demonstrative embodiments, the string length of a zone ID character string may be inversely proportional to the grid size of the geographical zone. For example, a first length of a first zone ID of a first geographical zone having a first grid size may be shorter than a second length of a second zone ID of a second geographical zone having a second grid size, for example, if the first grid size is larger than the second grid size.

In some demonstrative embodiments, the zone ID may include information about the geographical zone, for example, following the one or more zone ID character strings, e.g., as described below.

In some demonstrative embodiments, the zone ID may include at least one zone attribute value representing at least one respective attribute of the geographical zone, e.g., as described below.

In one example, the at least one zone attribute value may follow the one or more zone ID character strings, e.g., as described below.

In another example, the at least one zone attribute value may be arranged in any other manner, e.g., before the one or more zone ID character strings.

In some demonstrative embodiments, the zone attribute value may include a zone type value representing a type of the geographical zone, e.g., as described below.

In some demonstrative embodiments, the zone type value may represent an inactive zone, an exclusion zone, a restriction zone, or a protection zone, e.g., as described below.

In other embodiments, the zone type value may represent any other additional or alternative type of zone.

In some demonstrative embodiments, the zone attribute value may include a zone shape value representing a shape of the geographical zone, e.g., as described below.

In some demonstrative embodiments, the zone attribute value may include a zone activation value to indicate deactivation or reactivation of the geographical zone, e.g., as described below.

In some demonstrative embodiments, the zone attribute value may include a zone mobility value representing a mobility to be applied to the geographical zone, e.g., as described below.

In some demonstrative embodiments, the zone attribute value may include a zone discard value to indicate the geographical zone is to be discarded, e.g., as described below.

In some demonstrative embodiments, the zone attribute value may include at least one respective integer number following the one or more zone ID character strings, e.g., as described below.

In some demonstrative embodiments, the zone ID may include some or all of the zone attribute values described above, and/or one or more additional or alternative zone attribute values.

In some demonstrative embodiments, the zone ID may include information corresponding to a plurality of zones, e.g., as described below.

In some demonstrative embodiments, the zone ID may include a zone set identifier including a concatenation of a plurality of zone ID values corresponding to a respective plurality of geographical zones, e.g., as described below.

In some demonstrative embodiments, the zone ID may include a concatenation of a plurality of zone ID character strings encoding a respective plurality of geographical values corresponding to the geographical zones, e.g., as described below.

In some demonstrative embodiments, the zone ID may be based on location information including at least a geographical latitude value and a geographical longitude value, e.g., as described below.

In some demonstrative embodiments, the zone ID may be based on location information including one or more geographical values in decimal format, e.g., as described below.

In some demonstrative embodiments, controller 124 may be configured to control, cause and/or trigger device 102 to send, e.g., to device 140, a message 135 including the zone ID and shared spectrum resource management information corresponding to the geographical zone.

In one example, the shared spectrum resource management information corresponding to the geographical zone may include information corresponding to a resource or set of resources, which may be defined in time, space and/or frequency domains and/or any other additional or alternative information.

In one example, controller 124 may be configured to control, cause and/or trigger message processor 139 to generate the message 135, and/or communication interface 122 to send the message135, e.g., to device 140.

In some demonstrative embodiments, device 140 may receive the message 135 including the zone ID and shared spectrum resource management information corresponding to the geographical zone, e.g., from device 102.

In some demonstrative embodiments, controller 154 may be configured to control, cause and/or trigger device 140 to receive the message 135 from device 102.

In some demonstrative embodiments, controller 154 may be configured to control, cause and/or trigger device 140 to decode a zone ID to determine location information of the geographical zone.

In some demonstrative embodiments, controller 154 may be configured to control, cause and/or trigger device 140 to send a message 145 to device 102, e.g., in response to message 135.

In one example, controller 154 may be configured to control, cause and/or trigger message processor 159 to generate the message 145, and/or communication interface 142 to send the message 145 to device 102.

In some demonstrative embodiments, device 102 may receive message 145 from device 140.

In some demonstrative embodiments, controller 124 may be configured to control, cause and/or trigger device 102 to receive message 145 from device 140.

In some demonstrative embodiments, controller 124 may be configured to control, cause and/or trigger device 102 to trigger allocation of spectrum resources corresponding to the geographical zone, for example, based on message 145.

In some demonstrative embodiments, allocation of the spectrum resources, e.g., corresponding to the geographical zone, may be prioritized, e.g., as described below.

In some demonstrative embodiments, devices 102 and/or 140 may implement a hierarchical prioritization of usage, e.g., of the spectrum resources, for different types of users, e.g., as described below. For example, a first user may have a low priority and/or a second user may have a high priory, for example, for access and/or usage of the spectrum resources.

In one example, different types of users may gain access to spectrum resources, for example, based on a prioritized access to the spectrum resources. For example, tier-1 users may have highest priority, tier-2 users may have a priority level lesser than the tier-1 users, tier-3 users may have a priority level lesser than the tier-2 users, and so on.

In some demonstrative embodiments, devices 102 and/or 140 may be configured to generate, encode, communicate, process, and/or decode the zone ID, of the geographical zone for example according to a zone ID encoding scheme, e.g., as described below.

In some demonstrative embodiments, the zone ID encoding scheme may be implemented in one or more systems, e.g., as described below.

In some demonstrative embodiments, the zone ID encoding scheme may be globally applicable, for example, compared to legacy grid-based systems, e.g., according to an amateur radio locator square approach.

In some demonstrative embodiments, the zone ID encoding scheme may allow to support configurable and mixed grid sizes, for example, ranging from several thousand square kilometers to several square meters, e.g., as described below.

In some demonstrative embodiments, a size of a zone may be inversely proportional to a zone ID of the zone, which may enable the grid size to be determined from a length of the zone ID, e.g., as described below.

In some demonstrative embodiments, the zone ID may use a hexadecimal format, for example, to represent a zone ID, which may offer a higher degree of freedom, for example, compared to a standard numeric 0-9 and/or an alphabet-based addressing scheme.

In some demonstrative embodiments, system 100 may include a License Shared Access (LSA) system.

In some demonstrative embodiments, devices 102 and 140 may perform one or more operations of the zone ID encoding scheme in the LSA system, e.g., as described below.

In one example, an LSA system may include a system that enables and/or facilitates a realization of LSA. The LSA system may include LSA-specific technical features, architecture, protocols, and/or interfaces.

In some demonstrative embodiments, the shared spectrum resource management information corresponding to the geographical zone may include LSA Spectrum Resource Availability Information (LSRAI) corresponding to the geographical zone.

In some demonstrative embodiments, the LSRAI may include information provided to an LSA Licensee, which conveys an LSA spectrum resource that may be used by the LSA Licensee, and the respective operational conditions and restrictions that the LSA licensee shall apply.

In one example, an LSA spectrum resource, e.g., the LSRAI, may include a spectrum resource, which may be shared between an Incumbent and an LSA Licensee on a static or dynamic basis according to a Sharing Framework.

In one example, the LSRAI may be implemented as a container containing information regarding one or more zones, wherein each zone is identified by the zone ID (ZID). The ZID may uniquely identify a zone over one instance of an LSAI, e.g., between a pair of devices including an LC and an LR.

In some demonstrative embodiments, the LSRAI may include any other additional and/or alternative information.

In some demonstrative embodiments, devices 102 and/or 140 may be implemented as a device of the LSA system, e.g., as described below.

In one example, devices 102 and/or 140 may include an LSA licensee. For example, an LSA licensee may include an entity operating a Mobile/Fixed Communication Networks (MFCN), which holds individual rights of use to an LSA spectrum resource.

In some demonstrative embodiments, device 102 may include an LSA controller (LC), and/or device 140 may include an LSA repository (LR), e.g., as described below.

In some demonstrative embodiments, device 140 may include the LR, and/or device 102 may include an incumbent, e.g., as described below.

In one example, an incumbent may include a current holder of spectrum rights of use. The incumbent may include or perform one or more additional and/or alternative functionality.

In some demonstrative embodiments, device 140 may include the LR, and/or device 102 may include a User Equipment (UE) or an Evolved Node B (eNB), e.g., as described below.

In some demonstrative embodiments, an LSA system may implement an LSA technology, which may be focused on a provision of additional cellular capacity below 6 Gigahertz (GHz), e.g., in the European Union (EU), which is based on licensed shared usage of Third Generation Partnership Project (3GPP) Long Term Evolution (LTE).

In some demonstrative embodiments, the LSA technology may be the only mean for accessing a 2.3GHz band in the EU.

In one example, it may be expected that one or more other frequencies may come under the LSA in the future, e.g., as per European Conference of Postal and Telecommunications Administrations (CEPT)'s disclosures.

In some demonstrative embodiments, a coordinated shared usage of LTE, e.g., in the LSA system, may use location data associated with an intended usage.

In some demonstrative embodiments, the location data may describe location areas, and/or or zones, which may have an arbitrary size, may be applicable for a global usage, and/or may be machine-readable.

In some demonstrative embodiments, one or more elements of the LSA system, e.g., devices 102 and/or 140, may use the zone ID to denote a geographical area, e.g., under LSA control, which may be an exclusion, restriction, or a protection zone, e.g., in accordance with R-FUNC-05 and/or R-FUNC-06 of an ETSI TS 103 154 Specification and/or any other specifications.

For example, the zone type value in the zone ID in message 135 may represent the exclusion zone, the restriction zone, or the protection zone of the LSA system.

In one example, the exclusion zone may be an area where an LSA licensee may not be allowed to transmit. In another example, the exclusion zone may include any other type of area.

In one example, the protection zone may be an area where incumbent receivers are guaranteed protection from LSA licensees. In another example, the protection zone may include any other type of area.

In one example, the restriction zone may be an area where the LSA licensees may transmit under certain restriction, e.g., Effective Isotropic Radiated Power (EIRP) restriction, or any other additional or alternative restriction parameters. In another example, the restriction zone may include any other type of area.

In some demonstrative embodiments, a size of the geographical zone to be reported by the zone ID may not be fixed and/or may vary in area, e.g., from several thousand square kilometers to several squared meters.

In some demonstrative embodiments, devices 102 and 140 may be configured to create, encode, and/or decode the zone ID according to the zone ID encoding scheme, which may allow to provide a solution to the arbitrary geographical grid sizes.

In some demonstrative embodiments, the zone ID encoding scheme may provide the LSA system a technique to encode global geolocation data points, e.g., to produce zone IDs, for example, based on a grid approach.

In some demonstrative embodiments, the zone ID encoding scheme may allow to produce zone identifiers for use in an LSA system, and/or may provide means for converting zone identifiers back to human-readable latitude, longitude, and/or elevation data.

In some demonstrative embodiments, a grid size of a geographical zone corresponding to a zone identifier may be configured via a parameter modification, e.g., even without requiring changes to an algorithmic flow, e.g., in the LSA system. The zone ID encoding scheme may enable devices of the LSA system, e.g., devices 102 and/or 140, to encode and/or decode, zone sizes, e.g., ranging from thousands of square kilometers to a square meter.

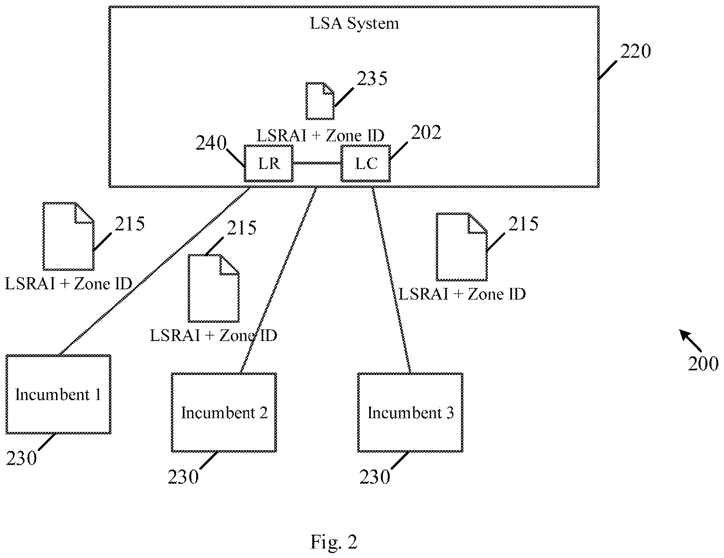

Reference is made to Fig. 2, which schematically illustrates an LSA architecture 200, in accordance with some demonstrative embodiments.

In some demonstrative embodiments, as shown in Fig. 2, LSA architecture 200 may include an LSA system 220 operable with a plurality of incumbents 230. In one example, device 140 (Fig. 1) may be configured to perform one or more functionalities and/or operations of an incumbent 230.

In some demonstrative embodiments, as shown in Fig. 2, LSA system 220 may utilize an LSAI, e.g., corresponding to a pair of an LR 240 and an LC 202. In one example, device 102 (Fig. 1) may be configured to perform one or more functionalities and/or operations of LC 202; and/or device 140 (Fig. 1) may be configured to perform one or more functionalities and/or operations of LR 240.

In some demonstrative embodiments, as shown in Fig. 2, LR 240 and LC 202 may communicate a LSRAI 235 including a zone ID.

In some demonstrative embodiments, as shown in Fig. 2, LSA system 200 and the plurality of incumbents 230 may communicate a plurality of LSRAI 215 including a zone ID, e.g., between LSA system 200 and the plurality of incumbents 230.

In some demonstrative embodiments, zone ID information may be conveyed as part of the LSAI and/or may be used to denote zones, e.g., in which protection, exclusion, restriction, and/or an LSA service usage may be required. Therefore, in some cases, the zone identification may be a critical part of a data set of the LSRAI.

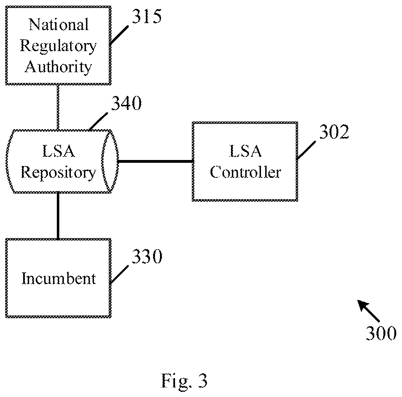

Reference is made to Fig. 3, which schematically illustrates an LSA architecture 300, in accordance with some demonstrative embodiments.

In some demonstrative embodiments, as shown in Fig. 3, LSA architecture 300 may include an LR 340 and an LC 302. In one example, device 102 (Fig. 1) may be configured to perform one or more functionalities and/or operations of LC 302, and/or device 140 (Fig. 1) may be configured to perform one or more functionalities and/or operations of LR 340.

In some demonstrative embodiments, as shown in Fig. 3, LSA architecture 300 may include one or more incumbents 330. In one example, device 102 (Fig. 1) may be configured to perform one or more functionalities and/or operations of an incumbent 330.

In some demonstrative embodiments, as shown in Fig. 3, LSA architecture 300 may include a National Regulatory Authority (NRA) 315.

In some demonstrative embodiments, as shown in Fig. 3, LR 340 may receive information from NRA 315 and/or from LC 302.

In some demonstrative embodiments, as shown in Fig. 3, LR 340 may interface with the one or more incumbents 330.

In some demonstrative embodiments, LR 340 may be may be, for example, responsible for entry and storage of information, for example, with respect to usage and/or protection requirements of the incumbents 330.

In some demonstrative embodiments, LR 340 may be configured, for example, to provide spectrum availability information to the LC 302.

In some demonstrative embodiments, LC 302 may be configured to enable an LSA liccnscc, c.g., an incumbent 330, to obtain LSRAI from LR 340, and/or to manage acknowledgement information.

In some demonstrative embodiments, LC 302 may map the LSRAI onto the LSA licensee mobile/fixed communications infrastructure.

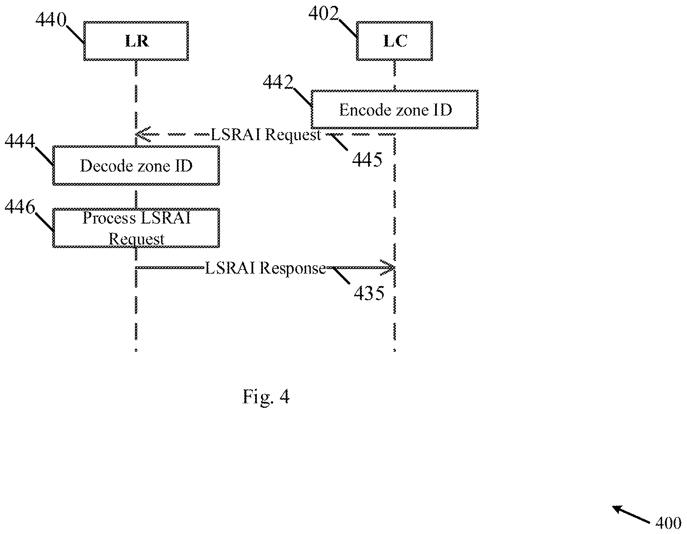

Reference is made to Fig. 4, which schematically illustrates operations and communications between an LR 440 and an LC 402, in accordance with some demonstrative embodiments. For example, device 102 (Fig. 1) may be configured to perform one or more functionalities and/or operations of LC 402; and/or device 140 (Fig. 1) may be configured to perform one or more functionalities and/or operations of LR 440.

In some demonstrative embodiments, one or more of the operations and communications of Fig. 4 may be performed between other devices and/or elements, for example between an LR, e.g., LR 440, and one or more incumbents, e.g., devices 330 (Fig. 3).

In some demonstrative embodiments, as shown in Fig. 4, LC 402 may perform an operation 442 of encoding a zone ID of a geographical zone, e.g., as described below.

In some demonstrative embodiments, as shown in Fig. 4, LC 402 may send an LSRAI request 425 including the zone ID and the LSRAI. For example, device 140 (Fig. 1) may transmit LSRAI request 425 to device 102 (Fig. 1).

In one example, LC 402 may encode latitude and longitude information, for example, to create a hexadecimal zone ID, e.g., as described below, and LC 402 may send hexadecimal zone ID, for example, as part of the LSRAI request 425.

In some demonstrative embodiments, as shown in Fig. 4, LR 440 may receive the LSRAI request 425 including the zone ID and the LSRAI.

In some demonstrative embodiments, as shown in Fig. 4, LR 440 may perform an operation 444 of decoding the zone ID, e.g., as described below.

In some demonstrative embodiments, as shown in Fig. 4, LR 440 may perform an operation 446 of processing the LSRAI request message 425, e.g., based on the zone ID.

In some demonstrative embodiments, as shown in Fig. 4, LR 440 may send an LSRAI response 435 to LC 402, e.g., based on the zone ID. For example, device 102 (Fig. 1) may transmit LSRAI response 435 to device 140 (Fig. 1).

In one example, LR 440 may decode the zone ID information and may use the zone ID, for example, as part of the LSRAI response 435.

Referring back to Fig. 1, in some demonstrative embodiments, system 100 may include, or may be implemented as part of, a Spectrum Access System (SAS).

In one example, the SAS may include the Federal Communications Commission (FCC) SAS or any other SAS.

In some demonstrative embodiments, devices 102 and/or 140 may be implemented as devices of the SAS, e.g., as described below.

In some demonstrative embodiments, devices 102 and 140 may be configured to perform one or more operations of encoding and/or communicating the zone ID in the SAS, e.g., as described below.

In some demonstrative embodiments, devices 102 and 140 may communicate message 135 including the zone ID and SAS spectrum management information corresponding to the geographical zone, e.g., if the zone ID encoding scheme is implemented in the SAS system, e.g., as described below.

In one example, an FCC Report and Order, e.g., released on April 17th, 2015, outlines rules for operating wireless devices in the 3.5GHz band that spans between 3550 - 3700 MHz. This FCC report released the 3.5GHz band for sharing with incumbents, which means that the incumbents get priority in the 3.5GHz band, and the 3.5GHz band may be used by broadband devices when and/or where the incumbents are not using the 3.5GHz band. The incumbents in the 3.5GHz band may include, for example, Department of Defense (DoD) radars. The incumbents in the 3.5GHz band may include, for example, at least two additional tiers of spectrum users, e.g., the Priority Access (PA) and the General Authorized Access (GAA), e.g., in addition to the DoD radars. Priority Access Licenses (PAL) users may get protection from GAA users, which may be similar to an unlicensed spectrum.

In some demonstrative embodiments, the SAS may coordinate a spectrum use the 3.5GHz band, for example, between the incumbents, the PA and/or the GAA.

In some demonstrative embodiments, the SAS may be central to the 3.5GHz band, for example, a tier 2 or a tier 3 device may not be able to operate, for example, unless the device may have a constant communication with the SAS, and/or may receive information from the SAS, e.g., of when and where to use channels of the 3.5GHz band.

In some demonstrative embodiments, a SAS may have to be approved, e.g., by the FCC, for example, before the SAS may be deployed. For example, since the SAS is the central coordinator for the 3.5GHz band, the SAS may need to have information about the network and/or devices of the network. The FCC may mandate most of this information to be contained in the SAS.

In some demonstrative embodiments, a system with SAS(s) may be implemented in accordance with FCC requirements, e.g., as described below.

In some demonstrative embodiments, if there are multiple SASs in a system, the SAS(s) may be configured to be synchronized with each other. However, the FCC does not specify details of how the SAS(s) have to be implemented and what information has to be synchronized.

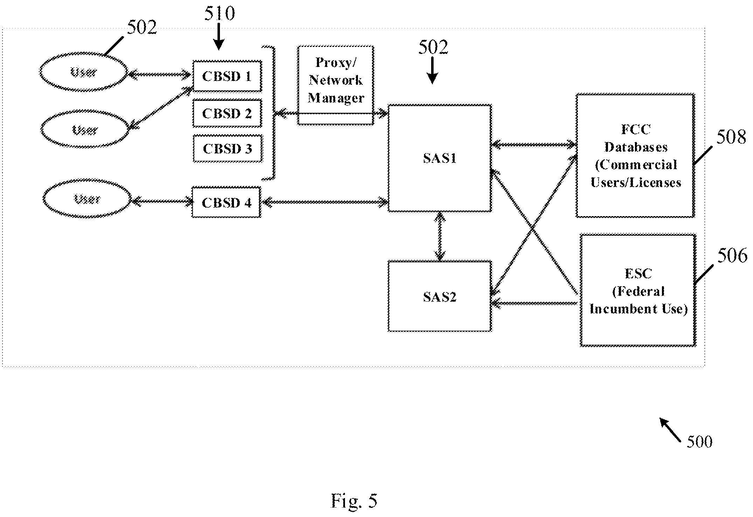

Reference is made to Fig. 5, which schematically illustrates a system of SAS 500, in accordance with some demonstrative embodiments.

In some demonstrative embodiments, system 500 may be configured to manage a spectrum, e.g., of the 3.5GHz band, for example, according to FCC requirements and/or any other requirements.

In some demonstrative embodiments, as shown in Fig. 5, system 500 may include one or more SAS(s) 502.

In some demonstrative embodiments, as shown in Fig. 5, system 500 may include one or more Citizens Broadband Radio Service (CBSDs) 510 to communicate with one or more users 512.

In some demonstrative embodiments, as shown in Fig. 5, SAS(s) 502 may communicate with an FCC database 508 and/or with an Environmental Sensing Capability (ESC) system 506.

In some demonstrative embodiments, one or more devices on SAS 502 may be configured to communicate a zone ID corresponding to geographical zone, e.g., as described below.

Refereeing back to Fig. 1, in some demonstrative embodiments devices 102 and/or 140 may be configured to encode and/or decode a zone ID corresponding to a geographical zone, for example, even for geographical zones of variable sizes, e.g., as described below.

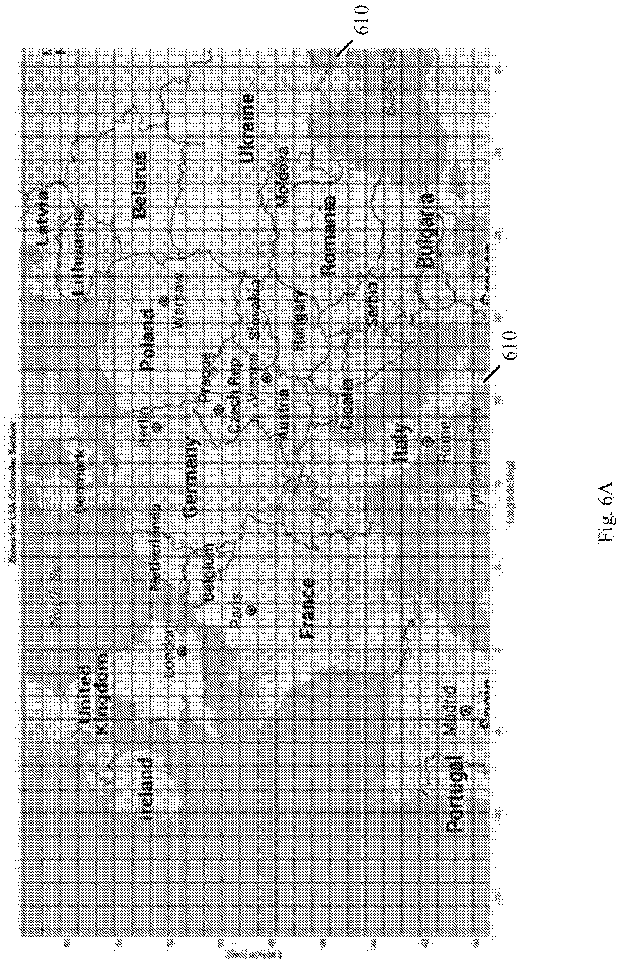

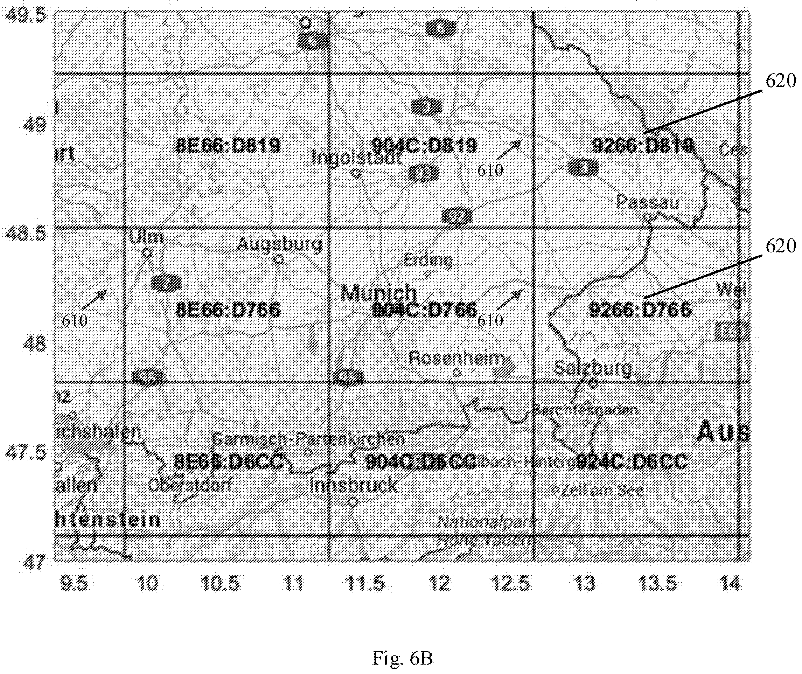

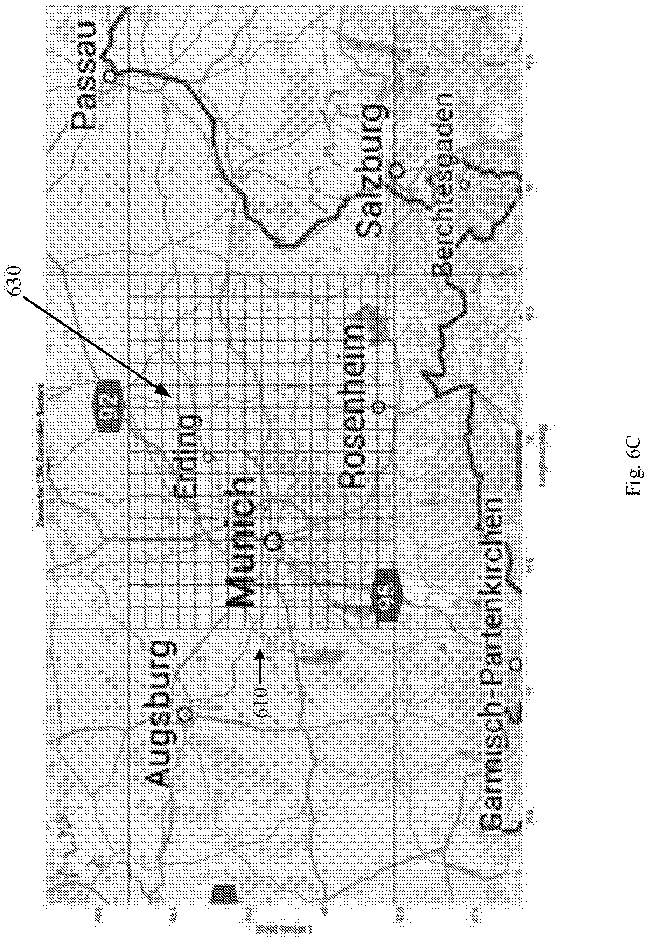

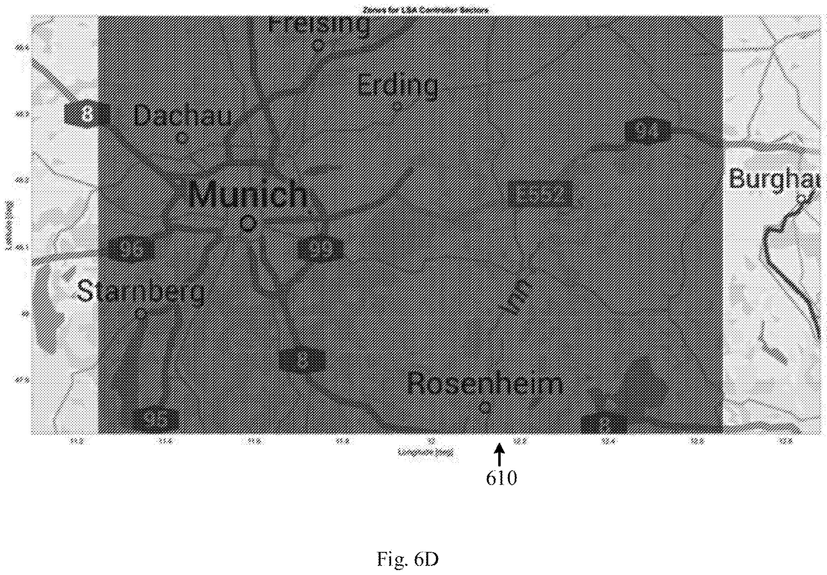

Reference is made to Figs 6A, 6B, 6C and 6D, which schematically illustrate different grid sizes of geographical zones, in accordance with some demonstrative embodiments.

In some demonstrative embodiments, as shown in Fig. 6A, a large geographical area, e.g., an area of a size of Europe or any other size, may be mapped to a plurality of zone areas 610.

In some demonstrative embodiments, as shown in Fig. 6B, the plurality of zone areas 610 of Fig. 6A may be identified by respective zone IDs 620.

In one example, the zone IDs 620 may be superimposed, for example, on grid sectors of Fig. 6A.

In some demonstrative embodiments, as shown in Fig. 6C, a zone area 610 of Fig. 6A may be segmented into an NxM grid 630, for example, to identify zone areas, which are smaller than the zone area 610. For example, grid 630 may include a 16x16 grid or any other grid.

In some demonstrative embodiments, zone area 610 of Fig. 6A may be segmented into any other additional or alternative grid, e.g., a 128x128 grid.

In some demonstrative embodiments, as shown in Fig. 6D, a zone area 610 of Fig. 6A may be segmented into a 256x256 grid, for example, to enable to identify a relatively small size area, e.g., for a fine-grain zone ID usage.

Referring back to Fig. 1, in some demonstrative embodiments, devices 102 and/or 140 may be configured to encode a zone ID corresponding to a geographical zone, e.g., as described below.

In some demonstrative embodiments, devices 102 and/or 140 may be configured to encode location information, for example, in the form of a latitude and a longitude, e.g., in a decimal format, into a grid identifier, e.g., in a hexadecimal (hex) format or any other format, for example, to create a zone ID, which may be used, e.g., in the LSA and/or the SAS systems, and/or any other system.

In some demonstrative embodiments, encoding the zone ID may support a variable granularity of grid size, e.g., different sizes of grid 630 (Fig. 6), while constraining a length of a zone ID to an *N*+*1* byte length hex string. Accordingly, a value of *N* may be used to indicate a size of the zone, e.g., as described below.

In some demonstrative embodiments, devices 102 and/or 140 may be configured to encode a latitude and longitude, for example, by encoding an integer part of decimal latitude and longitude values, and transforming fractional parts of the latitude and/or longitude values iteratively, e.g., as described below.

In some demonstrative embodiments, a number of encoded fractional parts of the latitude and/or longitude values may be determined, for example, based on a value of *N.*

In some demonstrative embodiments, encoding the zone ID of the geographical zone may include encoding an integer part of the latitude and/or longitude values of the geographical zone, e.g., as described below.

In some demonstrative embodiments, encoding the zone ID of the geographical zone may include iteratively encoding a fractional part of the latitude and/or longitude values of the geographical zone, for example, until all fractional digits are processed, e.g., as described below.

In some demonstrative embodiments, devices 102 and/or 140 may be configured to encode a zone ID of a geographical zone, for example, according to a zone ID encoding algorithm, e.g., as follows:

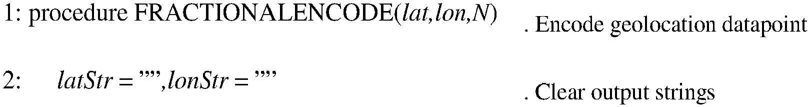

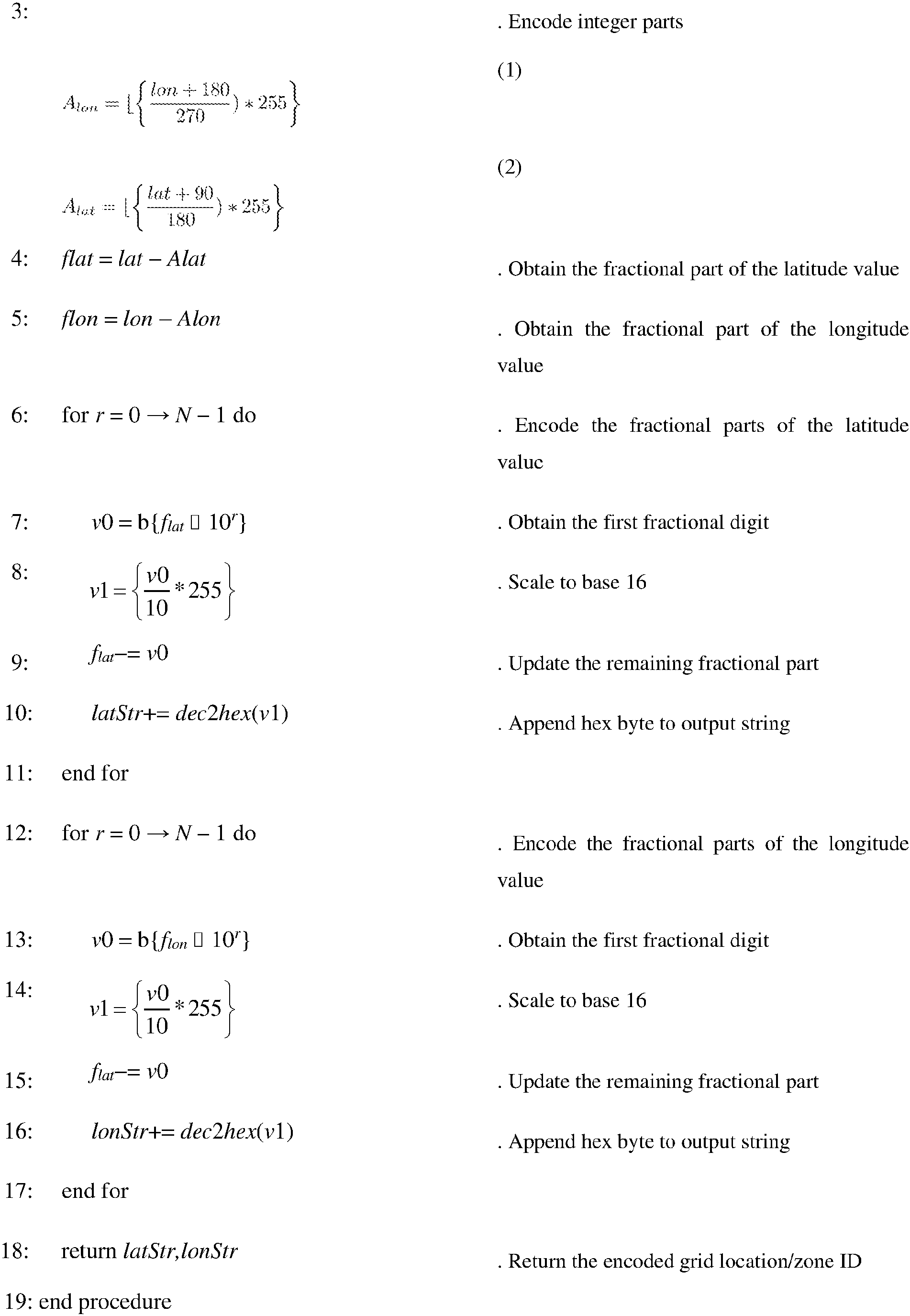

In some demonstrative embodiments, the zone ID encoding algorithm may include any other additional or alternatives operations.

In one example, a latitude of 48.8708 and longitude of 2.4131 may be resolved to the grid identifier 0xC4B24C4C99, 0xAC33B2E500, for example, if N = 4; or to a large grid identifier of 0xC4,0xAC, for example, if N = 1.

In some demonstrative embodiments, devices 102 and/or 140 may be configured to decode a zone ID of a geographical zone, for example, to obtain the geographical zone, e.g., as described below.

In some demonstrative embodiments, decoding the zone ID of the geographical zone may include iteratively decoding an integer part and a fractional part of the latitude and longitude values of the geographical zone, for example, until all characters of the zone ID are processed, e.g., as described below.

In some demonstrative embodiments, devices 102 and/or 140 may be configured to decode the zone ID of the geographical zone, for example, according to a zone ID decoding algorithm, e.g., as follows:

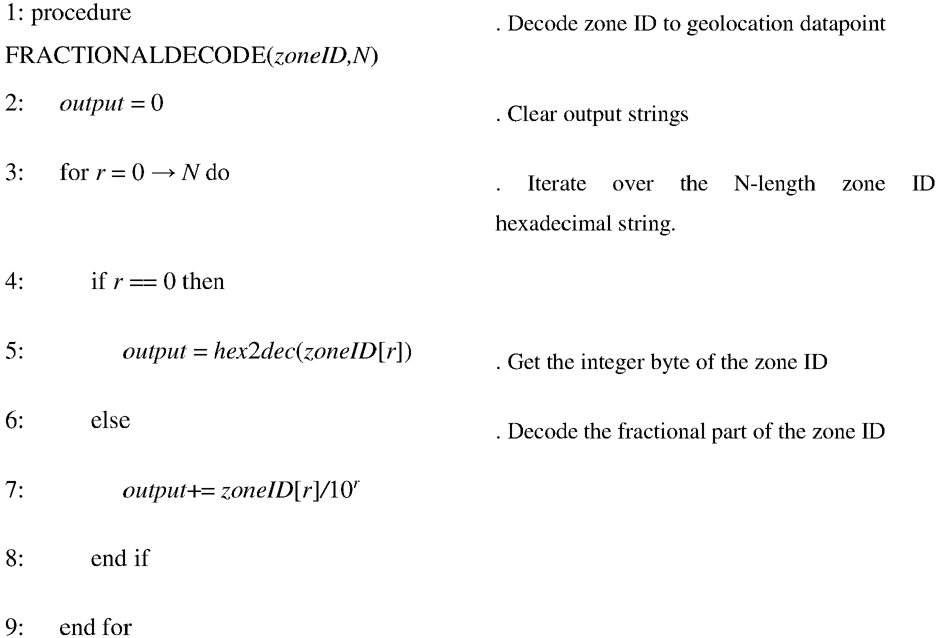

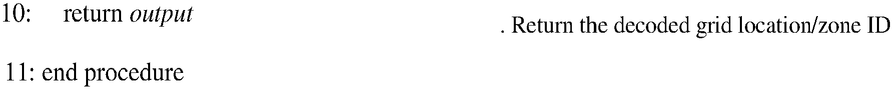

In some demonstrative embodiments, the zone ID decoding algorithm may include any other additional or alternatives operations.

In some demonstrative embodiments, devices 102 and/or 140 may use any other additional or alternative algorithms to encode and/or to decode the zone ID.

In some demonstrative embodiments, the zone ID may include information about the geographical zone, for example, following the one or more zone ID character strings, e.g., as described below.

In other embodiments, the information about the geographical zone may be arranged in any other manner, e.g., before the one or more zone ID character strings.

In some demonstrative embodiments, the zone ID may include at least one zone attribute value representing at least one respective attribute of the geographical zone, e.g., as described below.

In some demonstrative embodiments, the zone ID may include information corresponding to a plurality of zones, e.g., as described below.

In some demonstrative embodiments, the zone ID may include a zone set identifier including a concatenation of a plurality of zone ID values corresponding to a respective plurality of geographical zones, e.g., as described below.

In some demonstrative embodiments, the zone ID may include a concatenation of a plurality of zone ID character strings encoding a respective plurality of geographical values corresponding to the geographical zones, e.g., as described below.

In one example, a single Zone may be constructed based on multiple Zone "bricks", e.g., a Zone-Set-ID may be defined to include several independent Zone IDs. According to this example, the Zone-Set-ID may correspond to the grouping of the Zone "bricks".

In some demonstrative embodiments, the zone attribute value may include a zone type value representing a type of the geographical zone.

In some demonstrative embodiments, the zone type value may represent an inactive zone, an exclusion zone, a restriction zone, or a protection zone, e.g., as described below.

In other embodiments, the zone type value may represent any other additional or alternative zone type.

In one example, the zone type value may be indicated by an integer number following the ID of the zone. For example, a value of "0" or no indication may define an inactive zone, e.g., a zone with no restrictions, a value of "1" may define an exclusion zone, a value of "2" may define a restriction zone" and/or a value of "3" may define a protection zone".

In one example, a zone ID of an exclusion zone may not require additional information, e.g., since the only requirement is that an LSA Licensee equipment is not allowed to operate within the zone.

In one example, a zone ID of a restriction zone may include information, for example, on restrictions of configuration parameters of an LSA Licensee equipment. For example, the restrictions of configuration parameters may include, for example, maximum output power levels of a mobile device, maximum output power levels of a base station, a small cell, and/or the like. In another example, the zone ID of the restriction zone may include any other information.

In one example, a zone ID of a protection zone may include information, for example, on maximum, e.g., aggregate, field strength to be observed originating from all LSA Licensee Equipment operating within the Zone and/or in close proximity of the Zone. In another example, the zone ID of the protection zone may include any other information.

In some demonstrative embodiments, the zone attribute value may include a zone shape value representing a shape of the geographical zone, e.g., as described below.

In one example, the zone shape value may be indicated by an integer number, e.g., following the zone ID.

In one example, a value of "0" or no indication may indicate, for example, a first shape, e.g., a quadratic shape,.

In one example, a value of "1" may indicate, for example, a second shape, e.g., a rectangular shape, for example, including values indicating a width and a height of the rectangular shape, and/or a single factor indicating relationship between the width and shape of the rectangular shape.

In one example, a value of "2" may indicate, for example, a third shape, e.g., a circle-shape, for example, including a value to indicate a radius of the circle-shape.

In one example, a value of "3" may indicate, for example, a fourth shape, e.g., a hexagon shape, for example, including a value indicating a size of the hexagon-shape.

In one example, a value of "4" may indicate, for example, a fifth shape, e.g., a spline-shape, for example, including one or parameters corresponding to the shape of the spline-shape.

In another example, any other additional or alternative value may be implemented to indicate any other additional or alternative shape type of a geographical zone.

In some demonstrative embodiments, the zone attribute value may include a zone mobility value representing a mobility to be applied to the geographical zone, e.g., as described below.

In one example, the zone mobility value of a zone may be indicated, for example, when an exclusion zone is set around a mobile aircraft telemetry station, e.g., to be used by the military. According to this example, any movement of the mobile aircraft telemetry station may require a movement of the zone.

In one example, the zone mobility value may include the letter "M", e.g., following characters of the zone ID. In another example, the zone mobility value may include any other additional or alternative letter and/or character combination.

In one example, a direction of the movement may be indicated, for example, by an angular value corresponding to a direction, e.g., with respect to the Nautic North.

In one example, a speed of the movement may be indicated, for example, by a value and a unit of speed, e.g., meter/second (m/s), kilometer/hour (k/h) and the like.

In some demonstrative embodiments, the zone attribute value may include a zone activation value to indicate deactivation or reactivation of the geographical zone, e.g., as described below.

In one example, a geographical zone may be temporarily deactivated and then reactivated. According to this example, the zone ID may include a de-activation and/or activation trigger indication, e.g., the zone activation value, for example, using a letter combination, e.g., "DA" for de-activate and/or or "RA" for re-activate. In another example, the zone activation value may include any other additional or alternative letter and or character combination.

In some demonstrative embodiments, the zone attribute value may include a zone discard value to indicate the geographical zone is to be discarded, e.g., as described below.

In one example, a geographical zone may be discarded. According to this example, the zone ID may include an indication that the geographical zone is to be discarded, for example, a letter combination indicating the geographical zone is to be discarded, e.g., a letter combination of "DD" for discarded. In another example, the zone discard value may include any other additional or alternative letter and or character combination.

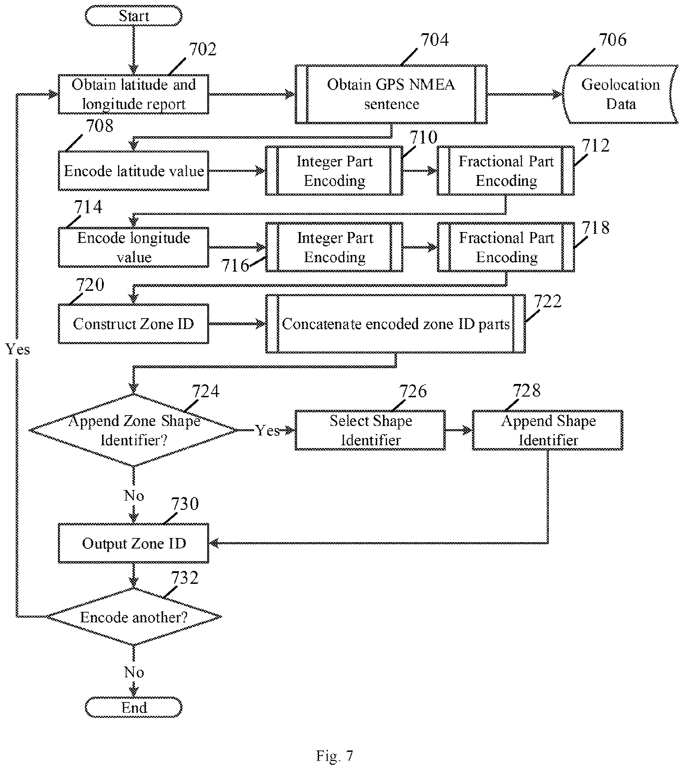

Reference is made to Fig. 7, which schematically illustrates a method of encoding a zone ID, in accordance with some demonstrative embodiments. In some embodiments, one or more of the operations of the method of Fig. 7 may be performed by one or more components and/or devices of a system, for example, an LSA system and/or a SAS system, for example, a device for management of shared spectrum resources, e.g., devices 102 and/or 140 (Fig. 1); and/or one or more elements of the device for management of shared spectrum resources, e.g., a controller, e.g., controllers 134 and/or 154 (Fig. 1); a message processor, e.g., message processor 139 (Fig. 1), and/or message processor 159 (Fig. 1); and/or a communication interface, e.g., communication interfaces 124 and/or 144 (Fig. 1).

As indicated at block 702, the method may include obtaining latitude and longitude report of a geographical zone. For example, device 102 (Fig. 1) may obtain a latitude and longitude report of the geographical zone, e.g., as described above.

As indicated at block 704, the method may include obtaining a GPS National Marine Electronics Association (NMEA) sentence of the geographical zone, for example, based on geolocation data 706 of the geographical zone. For example, device 102 (Fig. 1) may obtain the GPS NMEA sentence, for example, based on geolocation data 706.

As indicated at block 708, the method may include encoding a latitude value of the geographical zone. For example, device 102 (Fig. 1) may encode the latitude value, e.g., as described above.

As indicated at block 710, encoding the latitude value may include encoding an integer part of the latitude value. For example, device 102 (Fig. 1) may encode the integer part of the latitude value, e.g., as described above.

As indicated at block 712, encoding the latitude value may include encoding a fractional part of the latitude value. For example, device 102 (Fig. 1) may encode the fractional part of the latitude value, e.g., as described above.

As indicated at block 716, the method may include encoding a longitude value of the geographical zone. For example, device 102 (Fig. 1) may encode the longitude value, e.g., as described above.

As indicated at block 718, encoding the longitude value may include encoding an integer part of the longitude value. For example, device 102 (Fig. 1) may encode the integer part of the longitude value, e.g., as described above.

As indicated at block 718, encoding the longitude value may include encoding a fractional part of the longitude value. For example, device 102 (Fig. 1) may encode the fractional part of the longitude value, e.g., as described above.

As indicated at block 720, the method may include constructing a zone ID of the geographical zone, for example, based on the encoded latitude and/or the encoded longitude values. For example, device 102 (Fig. 1) may construct the zone ID of the geographical zone, for example, based on the encoded latitude and longitude values, e.g., as described above.

As indicated at block 722, the method may include constructing the zone ID by concatenating encoded zone ID parts, e.g., the latitude and longitude encoded values. For example, device 102 (Fig. 1) may concatenate the zone ID values of the geographical zone, e.g., as described above.

As indicated at block 724, the method may include determining whether or not to append a zone shape identifier, for example, to indicate a zone shape of the geographical zone. For example, device 102 (Fig. 1) may determine whether or not to include the zone shape value in the zone ID, for example, if the geographical zone have the zone shape, e.g., as described above.

As indicated at block 726, the method may include selecting the zone shape identifier, for example, based on the zone shape. For example, device 102 (Fig. 1) may determine the zone shape identifier for the geographical zone, for example, based on the zone shape, e.g., as described above.

As indicated at block 728, the method may include appending the zone shape identifier to the zone ID. For example, device 102 (Fig. 1) may append the zone shape identifier for the geographical zone, for example, following the zone ID, e.g., as described above.

As indicated at block 730, the method may include outputting the zone ID. For example, device 102 (Fig. 1) may output the zone ID of the geographical zone, e.g., as described above.

As indicated at block 732, the method may include determining whether or not to encode another zone identifier for another geographical zone. For example, device 102 (Fig. 1) may determine whether or not to encode another zone identifier for another geographical zone, e.g., as described above.

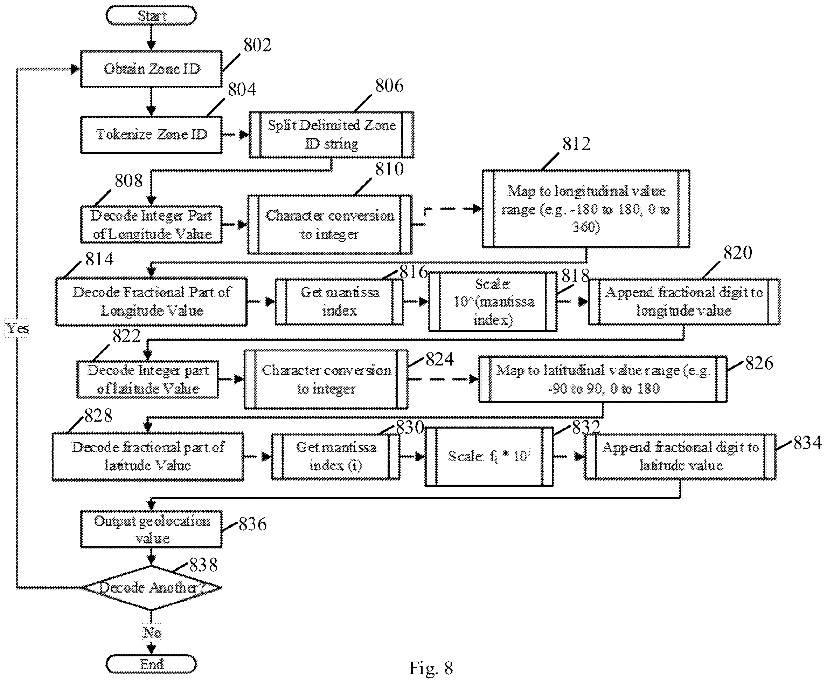

Reference is made to Fig. 8, which schematically illustrates a method of decoding a zone ID, in accordance with some demonstrative embodiments. In some embodiments, one or more of the operations of the method of Fig. 8 may be performed by one or more components and/or devices of a system, for example, an LSA system and/or a SAS system, for example, a device for management of shared spectrum resources, e.g., devices 102 and/or 140 (Fig. 1); and/or one or more elements of the device for management of shared spectrum resources, e.g., a controller, e.g., controllers 134 and/or 154 (Fig. 1); a message processor, e.g., message processor 139 (Fig. 1), and/or message processor 159 (Fig. 1); and/or a communication interface, e.g., communication interfaces 124 and/or 144 (Fig. 1).

As indicated at block 802, the method may include obtaining a zone ID of a geographical zone. For example, device 140 (Fig. 1) may obtain the zone ID of the geographical zone, for example, from message 135 (Fig. 1), e.g., as described above.

As indicated at block 804, the method may include tokenizing the zone ID. For example, device 140 (Fig. 1) may tokenize the zone ID of the geographical zone, e.g., as described above.

As indicated at block 806, the method may include splitting a delimited zone ID string into latitude and longitude strings. For example, device 140 (Fig. 1) may split the zone ID of the geographical zone, e.g., as described below.

In some demonstrative embodiments, the method may include decoding a longitude value of the geographical zone. For example, device 140 (Fig. 1) may decode the longitude value, e.g., as described above.

As indicated at block 808, decoding the longitude value may include decoding an integer part of the longitude value. For example, device 140 (Fig. 1) may decode the integer part of the longitude value, e.g., as described above.

As indicated at block 810, decoding the integer part of the longitude value may include converting characters of the integer part of the longitude value to an integer longitudinal value. For example, device 140 (Fig. 1) may convert characters of the integer part of the longitude value to an integer longitudinal value, e.g., as described above.

As indicated at block 812, decoding the integer part of the longitude value may include mapping the integer part of the longitude value to a longitudinal value range. For example, device 140 (Fig. 1) may map the integer part of the longitude value to the longitudinal value range, e.g., as described above.

As indicated at block 814, decoding the longitude value may include decoding a fractional part of the longitude value. For example, device 140 (Fig. 1) may decode the fractional part of the longitude value, e.g., as described above.

As indicated at block 816, decoding the fractional part of the longitude value may include obtaining a mantissa index. For example, device 140 (Fig. 1) may obtain the mantissa index.

As indicated at block 818, decoding the fractional part of the longitude value may include scaling the mantissa index. For example, device 140 (Fig. 1) may scale the mantissa index.

As indicated at block 820, decoding the fractional part of the longitude value may include appending a fractional digit to a longitude value. For example, device 140 (Fig. 1) may append the fractional digit to the longitude value, e.g., as described above.

In some demonstrative embodiments, the method may include decoding a latitude value of the geographical zone. For example, device 140 (Fig. 1) may decode the latitude value of the geographical zone, e.g., as described above.

As indicated at block 822, decoding the latitude value may include decoding an integer part of the latitude value. For example, device 140 (Fig. 1) may decode the integer part of the latitude value, e.g., as described above.

As indicated at block 824, decoding the integer part of the latitude value may include converting characters of the integer part of the latitude value to an integer latitudinal value. For example, device 140 (Fig. 1) may convert characters of the integer part of the latitude value to an integer latitudinal value, e.g., as described above.

As indicated at block 826, decoding the integer part of the latitude value may include mapping the integer part of the latitude value to a latitudinal value range. For example, device 140 (Fig. 1) may map the integer part of the latitude value to the latitudinal value range, e.g., as described above.

As indicated at block 828, decoding the latitude value may include decoding a fractional part of the latitude value. For example, device 140 (Fig. 1) may decode the fractional part of the latitude value, e.g., as described above.

As indicated at block 830, decoding the fractional part of the latitude value may include obtaining a mantissa index. For example, device 140 (Fig. 1) may obtain the mantissa index.

As indicated at block 832, decoding the fractional part of the latitude value may include scaling the mantissa index. For example, device 140 (Fig. 1) may scale the mantissa index.

As indicated at block 834, decoding the fractional part of the latitude value may include appending a fractional digit to the latitude value. For example, device 140 (Fig. 1) may append the fractional digit to the latitude value, e.g., as described above.

As indicated at block 836, the method may include outputting a geolocation value. For example, device 140 (Fig. 1) may output the geolocation value corresponding to the geographical zone, e.g., as described above.

As indicated at block 838, the method may include determining whether or not to decode another zone identifier for another geographical zone. For example, device 140 (Fig. 1) may determine whether or not to decode another zone identifier for another geographical zone, e.g., as described above.

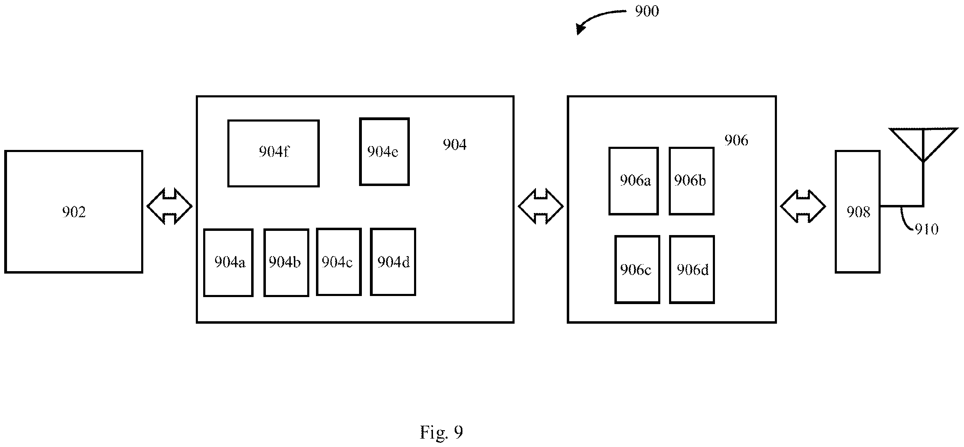

Reference is made to Fig. 9, which schematically illustrates elements of an electronic device 900, in accordance with some demonstrative embodiments. For example, device 102 (Fig. 1) may include one or more elements of device 900, and/or device 140 (Fig. 1) may include one or more elements of device 900. In one example, one or more elements of device 900 may be configured to perform one or more operations and/or functionalities of one or more of, controller 134 (Fig. 1), message processor 139 (Fig. 1), and/or one or more other elements of device 102 (Fig. 1). In one example, one or more elements of device 900 may be configured to perform the one or more operations and/or functionalities of one or more of controller 154 (Fig., 1), message processor 159 (Fig. 1), and/or one or more other elements of device 140 (Fig. 1). In some demonstrative embodiments, embodiments of an electronic device may be implemented into a system using any suitably configured hardware and/or software. Fig. 9 illustrates, for one embodiment, example components of device 900.

In some demonstrative embodiments, device 900 may include application circuitry 902, baseband circuitry 904, Radio Frequency (RF) circuitry 906, front-end module (FEM) circuitry 908, and one or more antennas 910, coupled together at least as shown.

In one example, application circuitry 902 may be configured to perform at least part of the functionality of controller 134 (Fig. 1), and/or message processor 139 (Fig. 1); and/or baseband circuitry 904, RF circuitry 906, and/or FEM circuitry 908 may be configured to perform at least part of the functionality of controller 134 (Fig. 1), and/or message processor 139 (Fig. 1).

In another example, application circuitry 902 may be configured to perform at least part of the functionality of controller 154 (Fig. 1), and/or message processor 159 (Fig. 1); and/or baseband circuitry 904, RF circuitry 906, and/or FEM circuitry 908 may be configured to perform at least part of the functionality of controller 154 (Fig. 1), and/or message processor 159 (Fig. 1).

In some demonstrative embodiments, the application circuitry 902 may include one or more application processors. For example, the application circuitry 902 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

In some demonstrative embodiments, the baseband circuitry 904 may include circuitry such as, but not limited to, one or more single-core or multi-core processors. The baseband circuitry 904 may include one or more baseband processors and/or control logic to process baseband signals received from a receive signal path of the RF circuitry 906 and to generate baseband signals for a transmit signal path of the RF circuitry 906. Baseband processing circuitry 904 may interface with the application circuitry 902, for example, for generation and processing of the baseband signals and for controlling operations of the RF circuitry 906. For example, in some embodiments, the baseband circuitry 904 may include a second generation (2G) baseband processor 904a, a third generation (3G) baseband processor 904b, a fourth generation (4G) baseband processor 904c, and/or other baseband processor(s) 904d for other existing generations, generations in development or to be developed in the future (e.g., fifth generation (5G), 6G, etc.). The baseband circuitry 904 (e.g., one or more of baseband processors 904a-d) may handle various radio control functions that enable communication with one or more radio networks via the RF circuitry 906. The radio control functions may include, but are not limited to, signal modulation/demodulation, encoding/decoding, radio frequency shifting, etc. In some embodiments, modulation/demodulation circuitry of the baseband circuitry 904 may include Fast-Fourier Transform (FFT), precoding, and/or constellation mapping/demapping functionality. In some embodiments, encoding/decoding circuitry of the baseband circuitry 904 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some demonstrative embodiments, the baseband circuitry 904 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 904e of the baseband circuitry 904 may be configured, for example, to run elements of the protocol stack for signaling of the PHY, MAC, RLC, PDCP and/or RRC layers. In some embodiments, the baseband circuitry may include one or more audio digital signal processor(s) (DSP) 904f. The audio DSP(s) 904f may be include elements for compression/decompression and echo cancellation, and/or may include other suitable processing elements in other embodiments. Components of the baseband circuitry 904 may be suitably combined in a single chip, a single chipset, or disposed on a same circuit board in some embodiments. In some embodiments, some or all of the constituent components of the baseband circuitry 904 and the application circuitry 902 may be implemented together such as, for example, on a system on a chip (SOC).

In some demonstrative embodiments, the baseband circuitry 904 may provide for communication compatible with one or more radio technologies. For example, in some embodiments, the baseband circuitry 904 may support communication with an evolved universal terrestrial radio access network (EUTRAN) and/or other wireless metropolitan area networks (WMAN), a wireless local area network (WLAN), a wireless personal area network (WPAN), and/or one or more additional or alternative networks. Embodiments in which the baseband circuitry 904 is configured to support radio communications of more than one wireless protocol may be referred to as multi-mode baseband circuitry.

In some demonstrative embodiments, RF circuitry 906 may enable communication with wireless networks using modulated electromagnetic radiation through a non-solid medium. In various embodiments, the RF circuitry 906 may include switches, filters, amplifiers, etc. to facilitate the communication with the wireless network. RF circuitry 906 may include a receive signal path which may include circuitry to down-convert RF signals received from the FEM circuitry 908, and to provide baseband signals to the baseband circuitry 904. RF circuitry 906 may also include a transmit signal path which may include circuitry to up-convert baseband signals provided by the baseband circuitry 904 and provide RF output signals to the FEM circuitry 908 for transmission.

In some demonstrative embodiments, the RF circuitry 906 may include a receive signal path and a transmit signal path. The receive signal path of the RF circuitry 906 may include mixer circuitry 906a, amplifier circuitry 906b, and filter circuitry 906c. The transmit signal path of the RF circuitry 906 may include filter circuitry 906c and mixer circuitry 906a. RF circuitry 906 may also include synthesizer circuitry 906d for synthesizing a frequency for use by the mixer circuitry 906a of the receive signal path and the transmit signal path. In some embodiments, the mixer circuitry 906a of the receive signal path may be configured to down-convert RF signals received from the FEM circuitry 908 based on the synthesized frequency provided by synthesizer circuitry 906d. The amplifier circuitry 906b may be configured to amplify the down-converted signals and the filter circuitry 906c may be, for example, a low-pass filter (LPF) or a band-pass filter (BPF), configured to remove unwanted signals from the down-converted signals to generate output baseband signals. Output baseband signals may be provided to the baseband circuitry 904 for further processing. In some embodiments, the output baseband signals may be zero-frequency baseband signals, although this is not a requirement. In some embodiments, mixer circuitry 906a of the receive signal path may comprise passive mixers, although the scope of the embodiments is not limited in this respect.

In some demonstrative embodiments, the mixer circuitry 906a of the transmit signal path may be configured to up-convert input baseband signals based on the synthesized frequency provided by the synthesizer circuitry 906d to generate RF output signals for the FEM circuitry 908. The baseband signals may be provided by the baseband circuitry 904 and may be filtered by filter circuitry 906c. The filter circuitry 906c may include a low-pass filter (LPF), although the scope of the embodiments is not limited in this respect.

In some demonstrative embodiments, the mixer circuitry 906a of the receive signal path and the mixer circuitry 906a of the transmit signal path may include two or more mixers and may be arranged for quadrature downconversion and/or upconversion respectively. In some embodiments, the mixer circuitry 906a of the receive signal path and the mixer circuitry 906a of the transmit signal path may include two or more mixers and may be arranged for image rejection (e.g., Hartley image rejection). In some embodiments, the mixer circuitry 906a of the receive signal path and the mixer circuitry 906a may be arranged for direct downconversion and/or direct upconversion, respectively. In some embodiments, the mixer circuitry 906a of the receive signal path and the mixer circuitry 906a of the transmit signal path may be configured for super-heterodyne operation.

In some demonstrative embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 906 may include analog-to-digital converter (ADC) and digital-to-analog converter (DAC) circuitry, and the baseband circuitry 904 may include a digital baseband interface to communicate with the RF circuitry 906.

In some dual-mode embodiments, a separate radio IC circuitry may be provided for processing signals for each spectrum, although the scope of the embodiments is not limited in this respect.

In some demonstrative embodiments, the synthesizer circuitry 906d may be a fractional-N synthesizer or a fractional N/N+1 synthesizer, although the scope of the embodiments is not limited in this respect as other types of frequency synthesizers may be suitable. For example, synthesizer circuitry 906d may be a delta-sigma synthesizer, a frequency multiplier, or a synthesizer comprising a phase-locked loop with a frequency divider.

In some demonstrative embodiments, the synthesizer circuitry 906d may be configured to synthesize an output frequency for use by the mixer circuitry 906a of the RF circuitry 906 based on a frequency input and a divider control input. In some embodiments, the synthesizer circuitry 906d may be a fractional N/N+1 synthesizer.

In some demonstrative embodiments, frequency input may be provided by a voltage controlled oscillator (VCO), although that is not a requirement. Divider control input may be provided by either the baseband circuitry 904 or the applications processor 902 depending on the desired output frequency. In some embodiments, a divider control input (e.g., N) may be determined from a look-up table based on a channel indicated by the applications processor 902.

In some demonstrative embodiments, synthesizer circuitry 906d of the RF circuitry 906 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some demonstrative embodiments, synthesizer circuitry 906d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 906 may include an IQ/polar converter.

In some demonstrative embodiments, FEM circuitry 908 may include a receive signal path which may include circuitry configured to operate on RF signals received from one or more antennas 910, amplify the received signals and provide the amplified versions of the received signals to the RF circuitry 906 for further processing. FEM circuitry 908 may also include a transmit signal path which may include circuitry configured to amplify signals for transmission provided by the RF circuitry 906 for transmission by one or more of the one or more antennas 910.

In some demonstrative embodiments, the FEM circuitry 908 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 906). The transmit signal path of the FEM circuitry 908 may include a power amplifier (PA) to amplify input RF signals (e.g., provided by RF circuitry 906), and one or more filters to generate RF signals for subsequent transmission (e.g., by one or more of the one or more antennas 910.

In some embodiments, the Device 900 may include one or more additional or alternative elements such as, for example, memory/storage, display, camera, sensor, and/or input/output (I/O) interface.

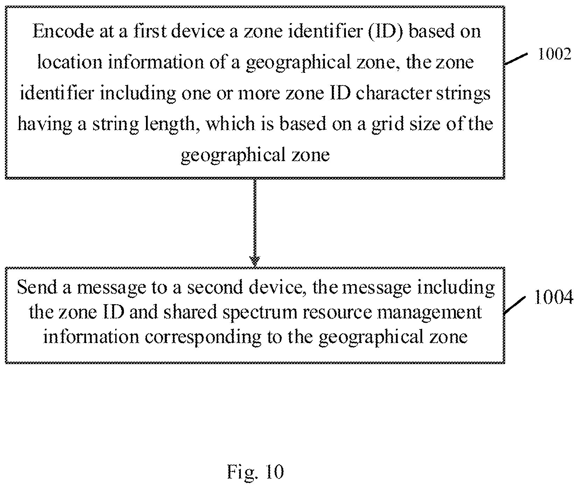

Reference is made to Fig. 10, which schematically illustrates a method of sending a zone ID for management of shared spectrum resources, in accordance with some demonstrative embodiments. In some embodiments, one or more of the operations of the method of Fig. 10 may be performed by one or more components and/or devices of a system, e.g., an LSA system and/or a SAS system, for example, a device for management of shared spectrum resources, e.g., devices 102 and/or 140 (Fig. 1); and/or one or more elements of the device for management of shared spectrum resources, e.g., a controller, e.g., controllers 134 and/or 154 (Fig. 1); a message processor, e.g., message processor 139 (Fig. 1), and/or message processor 159 (Fig. 1), and/or a network interface, e.g., communication interfaces 124 and/or 144 (Fig. 1).

As indicated at block 1002, the method may include encoding a zone ID based on location information of a geographical zone, the zone identifier including one or more zone ID character strings having a string length, which is based on a grid size of the geographical zone. For example, device 102 (Fig. 1) may encode the zone ID, for example, based on the location information of the geographical zone, and the zone identifier including the one or more zone ID character strings having the string length, which is based on the grid size of the geographical zone, e.g., as described above.

In one example, the method may include encoding or causing to encode a zone identifier based at least in part on location information corresponding to a location of a wireless network element.

As indicated at block 1004, the method may include sending a message to a second device, the message including the zone ID and shared spectrum resource management information corresponding to the geographical zone. For example, device 102 (Fig. 1) may send to device 140 (Fig. 1) message 135 (Fig. 1) including the zone ID and the shared spectrum resource management information corresponding to the geographical zone, e.g., as described above.

In one example, the method may include sending or causing to send an LSRAI request that includes the zone identifier, and/or receiving an LSRAI response, based at least in part on the LSRAI request.

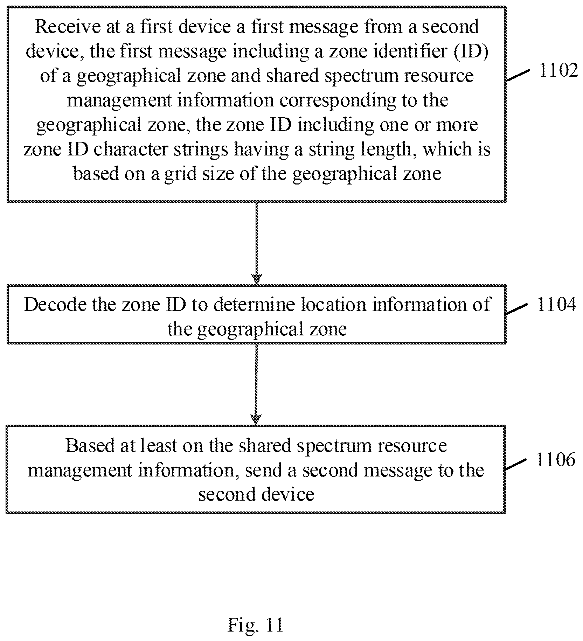

Reference is made to Fig. 11, which schematically illustrates a method of processing a received zone ID for management of shared spectrum resources, in accordance with some demonstrative embodiments. In some embodiments, one or more of the operations of the method of Fig. 11 may be performed by one or more components and/or devices of a system, e.g., an LSA system and/or a SAS system, for example, a device for management of shared spectrum resources, e.g., devices 102 and/or 140 (Fig. 1); and/or one or more elements of the device for management of shared spectrum resources, e.g., a controller, e.g., controllers 134 and/or 154 (Fig. 1); a message processor, e.g., message processor 139 (Fig. 1), and/or message processor 159 (Fig. 1), and/or a communication interface, e.g., communication interfaces 124 and/or 144 (Fig. 1).

As indicated at block 1102, the method may include receiving at a first device a first message from a second device, the first message including a zone ID of a geographical zone and shared spectrum resource management information corresponding to the geographical zone, the zone ID including one or more zone ID character strings having a string length, which is based on a grid size of the geographical zone. For example, device 102 (Fig. 1) may receive message 135 (Fig. 1) including the zone ID and the shared spectrum resource management information corresponding to the geographical zone, e.g., as described above.

In one example, the method may include receiving or causing to receive an LSRAI request that includes a zone identifier.

As indicated at block 1104, the method may include decoding a zone ID to determine location information of the geographical zone. For example, device 140(Fig. 1) may decode the zone ID to determine the location information of the geographical zone, e.g., as described above.

In one example, the method may include determining or causing to determine availability of a licensed shared access spectrum resource based at least in part on the decoded zone identifier and spectrum availability information from at least one incumbent.

As indicated at block 1106, the method may include sending a second message to the second device, based at least on the shared spectrum resource management information. For example, device 140 (Fig. 1) may send message 145 (Fig. 1) to device 102 (Fig. 1), for example, based at least on the shared spectrum resource management information, e.g., as described above.

In one example, the method may include sending an LSRAI response based at least in part on the determined availability of the licensed shared access spectrum resource.

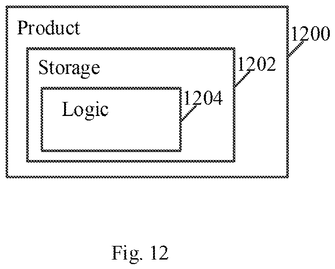

Reference is made to Fig. 12, which schematically illustrates a product of manufacture 1200, in accordance with some demonstrative embodiments. Product 1200 may include one or more tangible computer-readable non-transitory storage media 1202, which may include computer-executable instructions, e.g., implemented by logic 1204, operable to, when executed by at least one computer processor, enable the at least one computer processor to implement one or more operations at a device for management of shared spectrum resources, e.g., devices 102 and/or 140 (Fig. 1); and/or one or more elements of the device for management of shared spectrum resources, e.g., a controller, e.g., controllers 134 and/or 154 (Fig. 1); a message processor, e.g., message processor 139 (Fig. 1), and/or message processor 159 (Fig. 1), and/or a communication interface, e.g., communication interfaces 124 and/or 144 (Fig. 1), to cause device 102 (Fig. 1), device 140 (Fig. 1), controller 134 (Fig. 1), controller 154 (Fig. 1), message processor 139 (Fig. 1), message processor 159 (Fig. 1), and/or communication interfaces 124 and/or 144 (Fig. 1) to perform, trigger and/or implement one or more operations and/or functionalities described with reference to the Figs. 1, 2, 3, 4, 5, 6, 8, 9, 10, and/or 11, and/or one or more operations described herein. The phrase "non-transitory machine-readable medium" is directed to include all computer-readable media, with the sole exception being a transitory propagating signal.

In some demonstrative embodiments, product 1200 and/or storage media 1102 may include one or more types of computer-readable storage media capable of storing data, including volatile memory, non-volatile memory, removable or non-removable memory, erasable or non-erasable memory, writeable or re-writeable memory, and the like. For example, storage media 1202 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), Compact Disk ROM (CD-ROM), Compact Disk Recordable (CD-R), Compact Disk Rewriteable (CD-RW), flash memory (e.g., NOR or NAND flash memory), content addressable memory (CAM), polymer memory, phase-change memory, ferroelectric memory, silicon-oxide-nitride-oxide-silicon (SONOS) memory, a disk, a floppy disk, a hard drive, an optical disk, a magnetic disk, a card, a magnetic card, an optical card, a tape, a cassette, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative embodiments, logic 1204 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative embodiments, logic 1204 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, such as C, C++, Java, BASIC, Matlab, Pascal, Visual BASIC, assembly language, machine code, and the like.

Functions, operations, components and/or features described herein with reference to one or more embodiments, may be combined with, or may be utilized in combination with, one or more other functions, operations, components and/or features described herein with reference to one or more other embodiments, or vice versa.

## Claims

1. An apparatus to be used in a first device for management of shared spectrum resources, the apparatus comprising logic and circuitry configured to cause the first device to:
encode a zone identifier, ID, based on location information of a geographical zone, the zone ID comprising one or more zone ID character strings having a string length, which is based on a grid size of the geographical zone, wherein the zone ID further comprises a zone activation value to indicate deactivation or reactivation of the geographical zone; and
send a message to a second device, the message comprising the zone ID and shared spectrum resource management information corresponding to the geographical zone.

2. The apparatus of claim 1, wherein the one or more zone ID character strings have a string length of N+*1* bytes, wherein *N* denotes a grid granularity of the geographical zone.

3. The apparatus of claim 1 or 2, wherein the zone ID further comprises a zone set identifier comprising a concatenation of a plurality of zone ID values corresponding to a respective plurality of geographical zones.

4. The apparatus of any one of claims 1-3, wherein the zone ID comprises at least one zone attribute value representing at least one respective attribute of the geographical zone.

5. The apparatus of claim 4, wherein the at least one zone attribute value comprises a zone type value representing a type of the geographical zone.

6. The apparatus of claim 5, wherein the zone type value is to represent an inactive zone, an exclusion zone, a restriction zone, or a protection zone.

7. The apparatus of any one of claims 4-6, wherein the at least one zone attribute value comprises a zone shape value representing a shape of the geographical zone.

8. The apparatus of any one of claims 4-7, wherein the at least one zone attribute value comprises a zone mobility value representing a mobility to be applied to the geographical zone.

9. The apparatus of any one of claims 1-8, wherein the one or more zone ID character strings comprise one or more hexadecimal character strings.

10. The apparatus of any one of claims 1-9, wherein the logic and circuitry is further configured to cause the first device to process a response from the second device, and based on the response, to trigger allocation of spectrum resources corresponding to the geographical zone.

11. The apparatus of any one of claims 1-10, wherein the first device comprises a device of a Licenses Shared Access, LSA, system, the shared spectrum resource management information corresponding to the geographical zone comprising LSA Spectrum Resource Availability Information, LSRAI, corresponding to the geographical zone.

12. The apparatus of any one of claims 1-11, further comprising a communication interface, a memory, and a processor.

13. A method to be performed at a first device for management of shared spectrum resources, the method comprising: :
receiving a first message from a second device, the first message comprising a zone identifier, ID, of a geographical zone and shared spectrum resource management information corresponding to the geographical zone, the zone ID comprising one or more zone ID character strings having a string length, which is based on a grid size of the geographical zone, wherein the zone ID further comprises a zone activation value to indicate deactivation or reactivation of the geographical zone;
decoding the zone ID to determine location information of the geographical zone; and
based at least on the shared spectrum resource management information, sending a second message to the second device.

14. The method of claim 13, wherein the zone ID further comprises at least one zone attribute value representing at least one respective attribute of the geographical zone.

15. An apparatus comprising means for causing a device for management of shared spectrum resources to perform the method of claim 13 or 14.

## Patentansprüche

1. Vorrichtung zur Verwendung in einem ersten Gerät zur Verwaltung gemeinsam genutzter Spektrumsressourcen, wobei die Vorrichtung eine Logik und einen Schaltkreis umfasst, die so konfiguriert sind, dass sie das erste Gerät veranlassen zum:
Codieren eines Zonenidentifizierers, ID, basierend auf Standortinformationen einer geographischen Zone, wobei der Zonen-ID eine oder mehrere Zonen-ID-Zeichenketten mit einer Kettenlänge umfasst, die auf einer Gittergröße der geographischen Zone basiert, wobei der Zonen-ID ferner einen Zonenaktivierungswert umfasst, um eine Deaktivierung oder Reaktivierung der geographischen Zone anzuzeigen; und
Senden einer Nachricht an ein zweites Gerät, wobei die Nachricht der Zonen-ID und Verwaltungsinformationen der gemeinsam genutzten Spektrumsressourcen umfasst, die der geografischen Zone entsprechen.

2. Vorrichtung nach Anspruch 1, wobei die eine oder die mehreren Zonen-ID-Zeichenketten eine Kettenlänge von N+1 Byte haben, wobei N eine Gittergranularität der geographischen Zone bezeichnet.

3. Vorrichtung nach Anspruch 1 oder 2, wobei der Zonen-ID ferner einen Zonensatz-Identifikator umfasst, der eine Verkettung einer Vielzahl von Zonen-ID-Werten umfasst, die einer entsprechenden Vielzahl von geografischen Zonen entsprechen.

4. Vorrichtung nach einem der Ansprüche 1 bis 3, wobei der Zonen-ID mindestens einen Zonenattributwert umfasst, der mindestens ein jeweiliges Attribut der geografischen Zone darstellt.

5. Vorrichtung nach Anspruch 4, wobei der mindestens eine Zonenattributwert einen Zonentypwert umfasst, der einen Typ der geografischen Zone darstellt.

6. Vorrichtung nach Anspruch 5, wobei der Zonentypwert eine inaktive Zone, eine Ausschlusszone, eine Beschränkungszone oder eine Schutzzone darstellt.

7. Vorrichtung nach einem der Ansprüche 4 bis 6, wobei der mindestens eine Zonenattributwert einen Zonenformwert umfasst, der eine Form der geografischen Zone darstellt.

8. Vorrichtung nach einem der Ansprüche 4-7, wobei der mindestens eine Zonenattributwert einen Zonenmobilitätswert umfasst, der eine auf die geografische Zone anzuwendende Mobilität darstellt.

9. Vorrichtung nach einem der Ansprüche 1-8, wobei die eine oder mehreren Zonen-ID-Zeichenketten eine oder mehrere hexadezimale Zeichenketten umfassen.

10. Vorrichtung nach einem der Ansprüche 1 bis 9, wobei die Logik und Schaltung ferner so konfiguriert sind, dass sie das erste Gerät veranlassen, eine Antwort von dem zweiten Gerät zu verarbeiten und auf der Grundlage der Antwort die Zuweisung von Spektrumsressourcen entsprechend der geografischen Zone auszulösen.

11. Vorrichtung nach einem der Ansprüche 1-10, wobei das erste Gerät eine Vorrichtung eines Licensed-Shared-Access-, LSA-,-Systems umfasst, wobei die der geographischen Zone entsprechende Information zur Verwaltung der gemeinsam genutzten Spektrumsressourcen-LSA-Spektrumsressourcenverfügbarkeitsinformationen, LSRAI, entsprechend der geographischen Zone umfasst.

12. Vorrichtung nach einem der Ansprüche 1 bis 11, ferner umfassend eine Kommunikationsschnittstelle, einen Speicher und einen Prozessor.

13. Verfahren durchzuführend in einem ersten Gerät zur Verwaltung von gemeinsam genutzten Spektrumsressourcen, wobei das Verfahren umfasst:
Empfangen einer ersten Nachricht von einem zweiten Gerät, wobei die erste Nachricht einen Zonenidentifizierer, ID, einer geographischen Zone und der geographischen Zone entsprechende Informationen zur Verwaltung gemeinsam genutzter Spektrumsressourcen umfasst, wobei der Zonen-ID eine oder mehrere Zonen-ID-Zeichenketten mit einer Kettenlänge umfasst, die auf einer Gittergröße der geographischen Zone basiert, wobei der Zonen-ID ferner einen Zonenaktivierungswert umfasst, um die Deaktivierung oder Reaktivierung der geographischen Zone anzuzeigen;
Dekodieren des Zonen-ID, um Standortinformationen der geographischen Zone zu bestimmen; und
Senden einer zweiten Nachricht an das zweite Gerät zumindest auf der Grundlage der Information über die Verwaltung der gemeinsam genutzten Spektrumsressourcen.

14. Verfahren nach Anspruch 13, wobei der Zonen-ID ferner mindestens einen Zonenattributwert umfasst, der mindestens ein entsprechendes Attribut der geografischen Zone darstellt.

15. Vorrichtung, die Mittel umfasst, um ein Gerät zur Verwaltung von gemeinsam genutzter Spektrumsressourcen zu veranlassen, das Verfahren nach Anspruch 13 oder 14 durchzuführen.

## Revendications

1. Un appareil destiné à être utilisé dans un premier dispositif pour la gestion de ressources de spectre partagé, l'appareil comprenant une logique et une circuiterie configurées pour faire en sorte que le premier dispositif :
code un identifiant, ID, de zone sur la base d'une information de localisation d'une zone géographique, l'ID de zone comprenant une ou plusieurs chaînes de caractères d'ID de zone ayant une longueur de chaîne qui est basée sur une dimension de grille de la zone géographique, l'ID de zone comprenant en outre une valeur d'activation de zone pour indiquer la désactivation ou la réactivation de la zone géographique ; et
envoie un message à un second dispositif, le message comprenant l'ID de zone et une information de gestion de ressources de spectre partagé correspondant à la zone géographique.

2. L'appareil de la revendication 1, dans lequel les une ou plusieurs chaînes de caractères d'ID de zone ont une longueur de chaîne de *N+1* octets, N représentant une granularité de grille de la zone géographique.

3. L'appareil de la revendication 1 ou 2, dans lequel l'ID de zone comprend en outre un identifiant d'ensemble de zone comprenant une concaténation d'une pluralité de valeurs d'ID de zone correspondant à une pluralité respective de zones géographiques.

4. L'appareil de l'une des revendications 1 à 3, dans lequel l'ID de zone comprend au moins une valeur d'attribut de zone représentant au moins un attribut respectif de la zone géographique.

5. L'appareil de la revendication 4, dans lequel l'au moins une valeur d'attribut de zone comprend une valeur de type de zone représentant un type de la zone géographique.

6. L'appareil de la revendication 5, dans lequel la valeur de type de zone sert à représenter une zone inactive, une zone d'exclusion, une zone de restriction, ou une zone de protection.

7. L'appareil de l'une des revendications 4 à 6, dans lequel l'au moins une valeur d'attribut de zone comprend une valeur de forme de zone représentant une forme de la zone géographique.

8. L'appareil de l'une des revendications 4 à 7, dans lequel l'au moins une valeur d'attribut de zone comprend une valeur de mobilité de zone représentant une mobilité devant être appliquée à la zone géographique.

9. L'appareil de l'une des revendications 1 à 8, dans lequel les une ou plusieurs chaînes de caractères d'ID de zone comprennent une ou plusieurs chaînes de caractères hexadécimaux.

10. L'appareil de l'une des revendications 1 à 9, dans lequel la logique et la circuiterie sont en outre configurées pour faire en sorte que le premier dispositif traite une réponse provenant du second dispositif et, en fonction de la réponse, déclenche l'allocation de ressources de spectre correspondant à la zone géographique.

11. L'appareil de l'une des revendications 1 à 10, dans lequel le premier dispositif comprend un dispositif d'un système à accès partagé entre licenciés, LSA, l'information de gestion de ressources de spectre partagé correspondant à la zone géographique comprenant une information de disponibilité de ressources de spectre LSA, LSRAI, correspondant à la zone géographique.

12. L'appareil de l'une des revendications 1 à 11, comprenant en outre une interface de communication, une mémoire, et un processeur.

13. Un procédé destiné à être mis en œuvre sur un premier dispositif pour la gestion de ressources de spectre partagé, le procédé comprenant :
la réception d'un premier message en provenance d'un second dispositif, le premier message comprenant un identifiant, ID, de zone d'une zone géographique et une information de gestion de ressources de spectre partagé correspondant à la zone géographique, l'ID de zone comprenant une ou plusieurs chaînes de caractères d'ID de zone ayant une longueur de chaîne qui est basée sur une dimension de grille de la zone géographique, l'ID de zone comprenant en outre une valeur d'activation de zone pour indiquer la désactivation ou la réactivation de la zone géographique ;
le décodage de l'ID de zone pour déterminer une information de localisation de la zone géographique ; et
sur la base au moins de l'information de gestion de ressources de spectre partagé, l'envoi d'un second message au second dispositif.

14. Le procédé de la revendication 13, dans lequel l'ID de zone comprend en outre au moins une valeur d'attribut de zone représentant au moins un attribut respectif de la zone géographique.

15. Un appareil comprenant des moyens pour faire en sorte qu'un dispositif destiné à la gestion de ressources de spectre partagé mette en œuvre le procédé de la revendication 13 ou 14.
